# EUROPÄISCHE PATENTANMELDUNG

(11) **EP 4 729 824 A1**
(43) Veröffentlichungstag der Anmeldung: **22.04.2026**
(21) Anmeldenummer: 25208812.5
(22) Anmeldetag: 15.10.2025
(51) Int. Cl.: F16N 7/38, F16N 11/04, F16N 25/02, B65G 45/08

(54) **APPLIZIEREINHEIT FÜR EINE SCHMIERVORRICHTUNG EINES SYSTEMS ZUR SCHMIERUNG VON SCHMIERSTELLEN EINER GELENKKETTE SOWIE SCHMIERVORRICHTUNG SOWIE SYSTEM SOWIE DOPPELENDPROFILER SOWIE VERFAHREN ZUM BETRIEB EINES SYSTEMS**

(30) Priorität: 21.10.2024 DE 102024130590
(71) Anmelder: G. Kraft Maschinenbau GmbH, 33397 Rietberg-Mastholte (DE)
(72) Erfinder: Stallein, Marius, 33098 Paderborn (DE); van Reesch, Dominik, 33129 Delbrück (DE)
(74) Vertreter: Bauer PSU PartG mbB

(57) **Zusammenfassung**

Die vorliegende Anmeldung betrifft eine Appliziereinheit (1) für eine Schmiervorrichtung (2) eines Systems (3) zur Schmierung von Schmierstellen (4) einer Gelenkkette (5), insbesondere einer Transportkette eines Doppelendprofilers, umfassend ein Gehäuse (6), einen an dem Gehäuse (6) gelagerten Hohlkolben (7), eine Federeinrichtung (8), die zur Aufbringung einer Federkraft auf den Hohlkolben (7) eingerichtet ist, wobei das Gehäuse (6) ein festes Federlager (9) aufweist, an dem ein erstes Ende (10) der Federeinrichtung (8) gelagert ist, wobei der Hohlkolben (7) parallel zu seiner Längsachse (12) relativ zu dem Gehäuse (6) linear zwischen einer in das Gehäuse eingefahrenen Stellung und einer aus dem Gehäuse ausgefahrenen Stellung beweglich ist, wobei der Hohlkolben (7) einen sich parallel zu seiner Längsachse (12) erstreckenden und den Hohlkolben (7) entlang seiner gesamten Länge durchdringenden Schmierstoffkanal (13) aufweist, durch den hindurch Schmierstoff ausgehend von einem dem Gehäuse (6) zugewandten, proximalen Ende des Hohlkolbens (7) bis zu einer von dem Gehäuse (6) abgewandten, distalen Kolbenspitze (14) des Hohlkolbens (7) förderbar ist, wobei die Federeinrichtung (8) mit ihrem zweiten Ende (11), das ihrem ersten Ende (10) gegenüberliegt, derart an dem Hohlkolben (7) gelagert ist, dass die Federkraft der Federeinrichtung (8) in längsachsparallele Richtung des Hohlkolbens (7) auf selbigen einwirkt und der Hohlkolben (7) durch Wirkung der Federkraft in Abwesenheit äußerer Kräfte in seiner ausgefahrenen Stellung gehalten ist, wobei der Hohlkolben (7) unter Aufbringung einer axialen Kraft entgegen der Federkraft relativ zu dem Gehäuse (6) bewegbar und hierdurch in seine eingefahrene Stellung überführbar ist.

## Beschreibung

Die vorliegende Anmeldung betrifft eine Appliziereinheit für eine Schmiervorrichtung eines Systems zur Schmierung von Schmierstellen einer Gelenkkette gemäß Anspruch 1. Ferner betrifft die vorliegende Anmeldung eine Schmiervorrichtung für ein System zur Schmierung von Schmierstellen einer Gelenkkette gemäß Anspruch 7. Ferner betrifft die vorliegende Anmeldung ein System zur Schmierung von Schmierstellen einer Gelenkkette gemäß Anspruch 9. Ferner betrifft die vorliegende Anmeldung einen Doppelendprofiler zur gleichzeitigen Bearbeitung einander gegenüberliegender Enden von Werkstücken gemäß Anspruch 13. Schließlich betrifft die Anmeldung ein Verfahren zur Schmierung von Schmierstellen einer Gelenkkette gemäß Anspruch 14.

Eine "Gelenkkette" meint im Sinne der vorliegenden Anmeldung eine Kette, die eine Serie von Kettengliedern umfasst, die durch sich quer zur Kettenlängsrichtung erstreckenden Verbindungsbolzen gelenkig miteinander verbunden sind. Entsprechend sind die Kettenglieder relativ zueinander verdrehbar, wobei eine jeweilige Gelenkachse von der Längsachse des jeweiligen Verbindungsbolzens definiert ist. Die Verbindungsbolzen können (müssen nicht) jeweils von einer, zwei oder mehreren Rollen umgeben sein, die um die Längsachse des jeweiligen Verbindungsbolzen herum frei drehen können. Bei dieser Ausgestaltung kann die Gelenkkette beispielsweise mit den Rollen an einer Oberfläche abrollen und dadurch geführt sein. Eine solche Ausgestaltung ist beispielsweise bei Gelenkketten anzutreffen, die als Transportketten an Kettenaggregaten eines Doppelendprofilers verwendet werden. Gelenkketten, insbesondere in der Ausgestaltung als Rollenkette, sind in vielen Anwendungen weit verbreitet, insbesondere in Antriebssystemen von Fahrzeugen, Förderanlagen und Maschinen. Die bei einem Doppelendprofiler verwendeten Transportketten sind in aller Regel von Gelenkketten gebildet.

Das Schmieren (auch "Abschmieren" genannt) von Schmierstellen einer jeweiligen Gelenkkette erfolgt mittels eines Schmierstoffs. Die Schmierstellen sind typischerweise an den Verbindungsbolzen der jeweiligen Gelenkkette ausgebildet. Für das Schmieren wird beispielsweise sog. Schmierfett verwendet, das beispielsweise aus einem Schmieröl, einem Eindicker und verschiedenen Zusätzen oder Wirkstoffen (Additiven) bestehen kann. Schmierstoffe dienen insbesondere der Schmierung von Kontaktstellen, an denen sich Kontaktpartner relativ zueinander bewegen. Durch die Schmierung werden Reibungsverluste und Verschleiß der betroffenen Bauteile reduziert.

### Stand der Technik

Im Stand der Technik kommen Gelenkketten beispielsweise bei Doppelendprofilern zum Einsatz. Dort werden in Form sogenannter "Transportketten" verwendet. Hierbei handelt es sich um eine Gelenkkette, deren Kettenglieder jeweils mit einem Träger ausgestattet sind. Die Träger weisen eine zumindest im Wesentlichen ebene Oberseite auf. Auf den Oberseiten der Träger können Werkstücke aufgelegt und auf diese Weise mittels der Transportketten transportiert werden. Ein Doppelendprofiler (auch ein solcher gemäß der vorliegenden Anmeldung) umfasst typischerweise zwei Kettenaggregate mit jeweils einer Gelenkkette, wobei die Gelenkketten in sich geschlossen sind und umlaufend angetrieben werden. Ein Untertrum und ein Obertrum einer jeweiligen Gelenkkette sind vertikal übereinander geführt, wobei die Gelenkkette an endseitigen Umlenkstationen umgelenkt wird. Die Umlenkachsen der Umlenkstationen sind entsprechend horizontal orientiert. Die Kettenglieder der jeweiligen Gelenkkette bewegen sich nach alldem während eines Betriebs der Gelenkkette in einer vertikalen Ebene ("Kettenebene"). Die Kettenaggregate - und mithin auch ihre Gelenkketten - sind parallel zueinander orientiert sowie senkrecht zu ihren Kettenebenen betrachtet voneinander beabstandet angeordnet. Zur Bearbeitung von Werkstücken werden diese derart auf die Gelenkketten gelegt, dass sie auf beiden Gelenkketten (bzw. deren Trägern) gleichzeitig aufliegen. Hierbei überbrückt das Werkstück (beispielsweise eine Möbelplatte) den Zwischenraum zwischen den Gelenkketten. Die Gelenkketten werden mittels mindestens eines Antriebs synchron betrieben, sodass das jeweilige Werkstück entlang einer Bearbeitungsstrecke transportiert wird. Im Zuge der Bewegung des Werkstücks entlang der Bearbeitungsstrecke wird das Werkstück an Bearbeitungswerkzeugen entlanggeführt, mittels derer das Werkstück bearbeitet werden kann. Hierbei kann es sich beispielsweise um eine Säge oder einen Fräser handeln. Dabei ist jedem Ende des Werkstücks bzw. jeder Transportkette mindestens ein Bearbeitungswerkzeug zugeordnet, sodass die einander gegenüberliegenden Enden des Werkstücks synchron bearbeitet werden können.

Die Gelenkketten unterliegen während eines Betriebs des Doppelendprofilers einem Verschleiß. Dieser macht es erforderlich, dass sie regelmäßig gewartet werden. Dies beinhaltet auch das periodisch wiederkehrende Abschmieren von Schmierstellen der jeweiligen Gelenkkette. Dies kann beispielsweise und vorzugsweise mittels einer Schmierung der Verbindungsbolzen erfolgen. Die Schmierung der Gelenkketten findet manuell statt und ist mit hohem Aufwand (Zeit- und Personal-) verbunden.

Um diesem Problem zu begegnen, sind Vorrichtungen bekannt, die zur automatischen Schmierung von Ketten im Allgemeinen einsetzbar sind. Hierzu wird beispielsweise die Dokumente DE 33 12 589 A1 und US 9,701,484 B2 hingewiesen. Die bekannten Vorrichtungen haben jedoch den Nachteil, dass die Notwendigkeit einer manuellen Nachbearbeitung der Schmierstellen nicht ausgeschlossen werden kann, da es zu einem unerwünschten Austritt von Schmierstoff nach erfolgter Schmierung kommen kann. Dieses überschüssige Schmiermittel ist ggf. manuell abzureinigen.

### Aufgabe

Der vorliegenden Anmeldung liegt die Aufgabe zugrunde, das periodisch erforderliche Schmieren einer Gelenkkette zu erleichtern und hierdurch den Aufwand für das Schmieren zu reduzieren. Insbesondere soll das Schmieren zumindest teilweise, vorzugsweise vollständig, automatisch erfolgen, ohne dass es einer manuellen Nachbearbeitung bedarf.

### Lösung

Die zugrunde liegende Aufgabe wird mittels einer Appliziereinheit für eine Schmiervorrichtung eines Systems zur Schmierung von Schmierstellen einer Gelenkkette mit den Merkmalen des Anspruchs 1 gelöst. Vorteilhafte Ausgestaltungen ergeben sich aus den Unteransprüchen, der Beschreibung sowie dem Ausführungsbeispiel.

Die Appliziereinheit umfasst ein Gehäuse, einen an dem Gehäuse gelagerten Hohlkolben und eine Federeinrichtung. Die Federeinrichtung ist zur Aufbringung einer Federkraft auf den Hohlkolben eingerichtet. Die Federeinrichtung kann beispielsweise und vorzugsweise von einer vorgespannten Spiralfeder gebildet sein. Die Federeinrichtung ist vorzugsweise mit einer Druckspannung vorgespannt, sodass die Federeinrichtung bestrebt ist, den Hohlkolben aus dem Gehäuse heraus zu drücken und in Abwesenheit äußerer Kräfte in einer aus dem Gehäuse ausgefahrenen Stellung zu halten. Das Gehäuse weist ein festes Federlager auf, an dem ein erstes Ende der Federeinrichtung abgestützt bzw. gelagert ist. Das dem ersten Ende gegenüberliegende zweite Ende der Federeinrichtung ist an dem Hohlkolben gelagert.

Der Hohlkolben ist parallel zu seiner Längsachse relativ zu dem Gehäuse linear zwischen einer eingefahrenen Stellung und einer ausgefahrenen Stellung bewegbar an dem Gehäuse gelagert. Der Hohlkolben ist bevorzugt in sich starr und nicht teleskopierbar. Das "Einfahren" und "Ausfahren" bezieht sich hierbei auf eine Position des Hohlkolbens relativ zu dem Gehäuse. Bei Vorliegen in der eingefahrenen Stellung ist der Hohlkolben mit einem größeren Teil seiner Länge innerhalb des Gehäuses angeordnet als bei Vorliegen in seiner ausgefahrenen Stellung. Dabei ist es denkbar, dass der Hohlkolben bei Vorliegen in seiner eingefahrenen Stellung vollständig innerhalb des Gehäuses aufgenommen ist oder nur teilweise, wobei beispielsweise und vorzugsweise zumindest eine Kolbenspitze des Hohlkolbens auch bei Vorliegen des Hohlkolbens in seiner eingefahrenen Stellung außerhalb des Gehäuses verbleibt. In der ausgefahrenen Stellung befindet sich zumindest ein Teil des Hohlkolbens innerhalb des Gehäuses, sodass der Hohlkolben weiterhin an dem Gehäuse gelagert ist.

Der Hohlkolben weist einen sich parallel zu seiner Längsachse erstreckenden Schmierstoffkanal auf, durch den hindurch Schmierstoff bis zu einer von dem Gehäuse abgewandten, distalen Kolbenspitze des Hohlkolbens führbar ist. Der Schmierstoffkanal durchdringt den Hohlkolben auf seiner gesamten Länge (von einem proximalen Ende des Hohlkolbens bis zu einem distalen Ende des Hohlkolbens), sodass Schmierstoff ausgehend von dem proximalen Ende des Hohlkolbens durch den Schmierstoffkanal bis zu der distalen Kolbenspitze förderbar ist. Der Schmierstoffkanal erstreckt sich vorzugsweise koaxial zu der Längsachse des Hohlkolbens.

Wie vorstehend dargelegt, wirkt die Federeinrichtung mit ihrem zweiten Ende derart mit dem Hohlkolben zusammen, dass der Hohlkolben mittels der Federkraft der Federeinrichtung in Abwesenheit äußerer Kräfte in seiner ausgefahrenen Stellung gehalten ist. Insbesondere kann sich das zweite Ende der Federeinrichtung an einer Stützfläche des Hohlkolbens abstützen. Die ausgefahrene Stellung des Hohlkolbens kann beispielsweise und vorzugsweise durch einen Anschlag festgelegt bzw. definiert sein, der eine weitere Bewegung des Hohlkolbens relativ zu dem Gehäuse in die von dem Gehäuse abgewandte Richtung unterbindet. Ausgehend von der ausgefahrenen Stellung kann der Hohlkolben unter Aufbringung einer axialen Kraft (das heißt parallel zu seiner Längsachse) entgegen der Federkraft der Federeinrichtung relativ zu dem Gehäuse bewegt werden und hierdurch in seine eingefahrene Stellung überführt werden. Diese kann ebenfalls durch einen Anschlag definiert sein, der eine weitergehende Bewegung des Hohlkolbens in die dem Gehäuse zugewandte Richtung, das heißt in das Gehäuse herein, unterbindet. Bevorzugt ragt zumindest die distale Kolbenspitze in beiden Stellungen des Hohlkolbens (eingefahren und ausgefahren) über ein distales Ende des Gehäuses hinaus vor. Die Kolbenspitze ist bei Vorliegen des Hohlkolbens in der ausgefahrenen Stellung in einem größeren Abstand von dem Gehäuse angeordnet als bei Vorliegen des Hohlkolbens in der eingefahrenen Stellung, wobei gemäß vorstehender Erläuterung sich die Kolbenspitze bei Vorliegen des Hohlkolbens in seiner eingefahrenen Stellung innerhalb des Gehäuses befinden kann. Bei dieser Ausgestaltung ist der Hohlkolben bei Vorliegen in seiner eingefahrenen Stellung vollständig in dem Gehäuse "versenkt".

Die grundlegende Idee hinter der Appliziereinheit besteht darin, dass an der jeweiligen Schmierstelle, die geschmiert werden soll, nach dem Schmiervorgang (das heißt nach der Zuführung von Schmierstoff zu bzw. in die Schmierstelle) kein überschüssiger Schmierstoff von außen an der Schmierstelle verbleiben soll bzw. darf. Bei einer bekannten manuellen Schmierung, die beispielsweise mittels einer handelsüblichen Fettpresse erfolgen kann, ist ein solcher Verbleib von überschüssigem Schmierstoff durchaus bekannt, kann jedoch durch manuelles Abreinigen der jeweiligen Schmierstelle im Anschluss an die Schmierung einfach beseitigt werden. Bei einer gewünschten vereinfachten und insbesondere automatischen Schmierung ist ein solcher manueller Eingriff jedoch nicht gewünscht bzw. nicht vorgesehen.

Die grundlegende Idee der Erfindung besteht darin, dass die Appliziereinheit den Verbleib überschüssigen Schmierstoffs an der Kolbenspitze (und das damit einhergehende Risiko eines ungewollten Austritts von Schmierstoff nach einer erfolgen Schmierung) mittels der Bewegbarkeit des Hohlkolbens relativ zu dem Gehäuse vermeidet. Hierzu ist der Ablauf eines Schmiervorgangs an einer Schmierstelle genauer zu betrachten:

Zunächst wird eine jeweils zu schmierende Schmierstelle relativ zu der Appliziereinheit in Position gebracht. Hierbei ist es bevorzugt, wenn die Appliziereinheit stillsteht und die Schmierstelle bewegt wird, bis die gewünschte Relativposition erreicht ist. Am Beispiel eines Doppelendprofilers kann beispielsweise die Appliziereinheit als Teil einer Schmiervorrichtung eines fest installierten Systems zur Schmierung an dem Doppelendprofiler verbaut sein, wobei die zu schmierende Gelenkkette relativ zu der Appliziereinheit bewegt wird, um eine jeweilige Schmierstelle in eine gewünschte Position relativ zu der Appliziereinheit zu bringen. Gleichwohl ist auch eine Bewegung der Appliziereinheit zwecks Anordnung relativ zu der jeweiligen Schmierstelle denkbar. Die Appliziereinheit und die Schmierstelle befinden sich in bestimmungsgemäßer Position relativ zueinander, wenn die Schmierstelle fluchtend mit der Längsachse des Hohlkolbens ausgerichtet ist. "Fluchtend" bedeutet hier, dass sich die Schmierstelle in Verlängerung der Längsachse des Hohlkolbens befindet. Zunächst befindet sich dabei die Schmierstelle in einem parallel zu der Längsachse gemessenen Abstand von dem Hohlkolben bzw. seiner distalen Kolbenspitze. Sodann wird die Appliziereinheit in Richtung parallel zu der Längsachse des Hohlkolbens auf die Schmierstelle zu bewegt. Hierzu kann beispielsweise die Appliziereinheit insbesondere an einem Grundkörper der Schmiervorrichtung gelagert sein, der als solcher (mitsamt der daran angeordneten Appliziereinheit) mittels eines Fahrantriebs relativ zu einer Basis der Schmiervorrichtung linear entlang einer Bewegungsachse bewegt wird. Dies ist nachstehend im Zusammenhang mit der Schmiervorrichtung näher erläutert. Die Bewegung der Appliziereinheit findet parallel zu der Längsachse des Hohlkolbens statt.

Sobald der Hohlkolben mit seiner distalen Kolbenspitze auf die Schmierstelle trifft, kann sich der Hohlkolben wegen des Kontakt mit der Schmierstelle, die als solche nicht in Richtung parallel zu der Längsachse des Hohlkolbens bewegbar ist, nicht weiter parallel zu seiner Längsachse bewegen. Daher wird bei Fortsetzung der Bewegung der Appliziereinheit auf die Schmierstelle zu der Hohlkolben infolge des Anschlags an der Schmierstelle entgegen der Federkraft der Federeinrichtung in längsachsparallele Richtung von seiner ausgefahrenen Stellung in Richtung seiner eingefahrenen Stellung bewegt. Hierbei bewegt sich das Gehäuse der Appliziereinheit weiter relativ zu der Schmierstelle auf diese zu, während der in seiner Bewegung infolge des Anschlags an der Schmierstelle behinderte Hohlkolben in das Gehäuse "eingedrückt" wird. Die Längsachse des Hohlkolbens ist hierbei parallel zu der Bewegungsachse orientiert, entlang der die Appliziereinheit als Ganze auf die Schmierstelle zu bewegt wird. Um den Hohlkolben "einzufahren" muss lediglich der jeweilige Fahrantrieb, der die Bewegung der Appliziereinheit antreibt, die Federkraft der Federeinrichtung überwinden. Mithin wird der Hohlkoben in Richtung seiner eingefahrenen Stellung bewegt.

Dies hat zur Folge, dass ein für den Schmierstoff zur Verfügung stehendes Volumen innerhalb der Appliziereinheit reduziert wird, da der innerhalb des Gehäuses für den Schmierstoff zur Verfügung stehende Raum infolge des Eindrückens des Hohlkolbens reduziert wird. Dies liegt darin begründet, dass der Hohlkolben innerhalb des Gehäuses Raum beansprucht und den Schmierstoff, der diesen Raum bisher ausgefüllt hat, verdrängt. Der Schmierstoffkanal des Hohlkolbens bleibt in seinem Volumen unverändert, da der Hohlkolben als solcher nicht verformt wird und seine Länge beibehält. Wären vor der Überführung des Hohlkolbens von seiner ausgefahrenen Stellung in seine eingefahrene Stellung sowohl der Hohlkolben als auch das Gehäuse vollständig mit Schmierstoff gefüllt, würde als Folge des Einfahrens des Hohlkolbens in das Gehäuse Schmierstoff infolge der beschriebenen Verdrängung an der distalen Kolbenspitze aus dem Hohlkoben herausgedrückt. Eine Verdrängung des Schmierstoffs in Richtung eines Schmierstofftanks, von dem ausgehend der Appliziereinheit Schmierstoff zugeleitet wird, ist vorzugweise nicht möglich, da vorzugsweise ein zu diesem Zeitpunkt in seiner Geschlossenstellung vorliegendes Absperrventil des Systems zur Schmierung einen Fluss von Schmierstoff in die Appliziereinheit herein und aus der Appliziereinheit heraus unterbindet.

In der praktischen Anwendung kommt es in der Regel nicht zu so einem Herausdrücken von Schmierstoff an der Kolbenspitze im Zuge der Überführung des Hohlkolbens ausgehend von seiner ausgefahrenen Stellung in seine eingefahrene Stellung, da typischerweise vor dieser Bewegung des Hohlkolbens die in dem Gehäuse und ggf. dem Schmierstoffkanal des Hohlkolbens vorhandene Menge an Schmierstoff höchstens von solchem Betrag ist, dass der für den Schmierstoff zur Verfügung stehenden Raum innerhalb des Gehäuses und des Schmierstoffkanals des Hohlkolbens ausreicht. Mit anderen Worten sind der Hohlkolben und das Gehäuse vor Beginn eines Schmiervorgangs einer Schmierstelle typischerweise nicht vollständig mit Schmierstoff gefüllt. Dass dies so ist, liegt in der Betriebsweise der Appliziereinheit bzw. der Schmiervorrichtung (zu der die Appliziereinheit gehört) bzw. des Systems zur Schmierung (zu dem die Schmiervorrichtung gehört) begründet:

Gemäß vorstehender Erläuterung befindet sich der Hohlkolben nach der Bewegung der Appliziereinheit auf die Schmierstelle zu sowie infolge des daraus resultierenden Anschlags an der Schmierstelle in seiner eingefahrenen Stellung. Die Kolbenspitze befindet sich in Eingriff mit der Schmierstelle, sodass durch den Hohlkoben hindurch (das heißt durch den Schmierstoffkanal des Hohlkolbens) Schmierstoff in die Schmierstelle einbringbar ist. In diesem Zustand kann nunmehr Schmierstoff in die Schmierstelle eingebracht werden. Beispielsweise und vorzugsweise wird hierzu zunächst ein genanntes Absperrventil in seine Offenstellung überführt und sodann eine Schmierstoffpumpe des Systems zur Schmierung aktiviert, beispielsweise für eine Dauer von 5 Sekunden. Hierdurch wird ausgehend von dem Schmierstofftank Schmierstoff zu der Appliziereinheit befördert und dort an der distalen Kolbenspitze an die Schmierstelle abgegeben. In dieser Zeit des Betriebs der Schmierstoffpumpe wird folglich die Schmierstelle über die Appliziereinheit mit Schmierstoff beschickt. Der in dem Gehäuse für den Schmierstoff zur Verfügung stehende Raum und der Schmierstoffkanal des Hohlkolbens sind vollständig mit Schmierstoff gefüllt, der durch das Gehäuse und den Hohlkolben strömt.

Nach erfolgter Schmierung wird die Schmierstoffpumpe deaktiviert und anschließend das Absperrventil wieder in seine Geschlossenstellung geschaltet. Es kann daraufhin zu keinem (ungewollten) Nachfluss von Schmierstoff in die Appliziereinheit mehr kommen. Ebenfalls ist ein Rückfluss von in der Appliziereinheit vorhandenem Schmierstoff zurück in den Schmierstofftank unterbunden. Der für den Schmierstoff innerhalb des Gehäuses zur Verfügung stehende Raum ist zu diesem Zeitpunkt zumindest im Wesentlichen vollständig mit Schmierstoff gefüllt.

Sodann wird die Appliziereinheit von der Schmierstelle wegbewegt (in Richtung parallel zu der Längsachse des Hohlkolbens). Die Federeinrichtung bewirkt dabei, dass der Hohlkolben ausgehend von der eingefahrenen Stellung aus dem Gehäuse heraus bewegt wird, bis er schließlich seine ausgefahrene Stellung erreicht. Hierdurch bedingt verbleibt die Kolbenspitze im Zuge der Bewegung der Appliziereinheit weg von der Schmierstelle zunächst in Eingriff mit der Schmierstelle, bis das Gehäuse der Appliziereinheit so weit in Richtung parallel zu der Längsachse des Hohlkolbens von der Schmierstelle wegbewegt wurde, dass der Hohlkolben seine ausgefahrene Stellung relativ zu dem Gehäuse erreicht hat. Die Appliziereinheit wird dann noch weiter von der Schmierstelle wegbewegt, sodass die distale Kolbenspitze ihren Kontakt und Eingriff mit der Schmierstelle verliert und ein parallel zu der Längsachse des Hohlkolbens gemessener Abstand zwischen der Kolbenspitze und der Schmierstelle entsteht. Die Appliziereinheit hat daraufhin von der Schmierstelle "abgedockt".

Das durch die Federeinrichtung angetriebene Ausfahren des Hohlkolbens aus dem Gehäuse im Zuge der Bewegung der Appliziereinheit von der Schmierstelle weg führt dazu, dass der für den Schmierstoff innerhalb des Gehäuses zur Verfügung stehende Raum (wieder) größer wird. Da sich nämlich der Hohlkolben aus dem Gehäuse heraus bewegt, wird innerhalb des Gehäuses zuvor von dem Hohlkolben beanspruchter Raum frei. Mithin wird durch das Überführen des Hohlkolbens in seine ausgefahrene Stellung innerhalb des Gehäuses ein Unterdruck erzeugt. Da wegen des in seiner Geschlossenstellung vorliegenden Absperrventils weder Schmierstoff noch Luft aus Richtung des Schmierstofftanks ("von hinten") in das Gehäuse nachströmen kann, kann der Unterdruck nur über den Schmierstoffkanal des Hohlkolbens ("von vorne") abgebaut werden. Daher wird durch den Atmosphärendruck Luft durch die Kolbenspitze in den Hohlkolben eingedrückt. Hierbei wird auch der Schmierstoff zurück in Richtung des Gehäuses in den Hohlkoben eingedrückt. Mit anderen Worten wird der in dem Hohlkolben befindliche Schmierstoff, der nach der Deaktivierung der Schmierstoffpumpe von der erfolgten Schmierung der Schmierstelle noch unmittelbar an der Kolbenspitze anliegt, bei der Bewegung des Hohlkolbens in seine ausgefahrene Stellung infolge des sich in dem Gehäuse bildenden Unterdrucks zurück in Richtung des Gehäuses in den Hohlkolben "eingesogen". Damit ist ein unbeabsichtigter Austritt von Schmierstoff nach erfolgter Schmierung einer jeweiligen Schmierstelle unterbunden.

Zusammengefasst wird folglich durch die axiale Bewegbarkeit des Hohlkolbens relativ zu dem Gehäuse der Schmierstoff nach erfolgter Schmierung der jeweiligen Schmierstelle selbsttätig wieder in Richtung des Gehäuses eingesogen, sodass die Kolbenspitze sauber ist und es nicht zu einem unbeabsichtigten Austritt von Schmierstoff kommt.

Folglich hat die Appliziereinheit den besonderen Vorteil, dass die Schmierung von Schmierstellen einer Gelenkkette ohne manuelle Reinigung der jeweiligen Schmierstelle nach erfolgter Schmierung auskommt. Somit kann die Appliziereinheit besonders vorteilhaft als Teil einer automatisch arbeitenden Schmiervorrichtung bzw. Teil eines automatisch arbeitenden Systems zur Schmierung von Schmierstellen einer Gelenkkette verwendet werden. Eine Verwendung als händisch geführte Appliziereinheit, die manuell als Ganze in Kontakt mit einer jeweiligen Schmierstelle gebracht wird und bei der der Schmierstoff manuell gefördert wird (ähnlich zu einer Fettpresse) ist ebenfalls denkbar.

In einer Ausführungsform der Appliziereinheit umfasst der Hohlkolben eine Schmierdüse, die an einem distalen Ende des Hohlkolbens angeordnet ist und dessen distale Kolbenspitze bildet. Der Hohlkolben kann mit der Schmierdüse einstückig ausgebildet sein. Vorteilhaft ist es gleichwohl, wenn die Schmierdüse separat von einem Kolbenkörper des Hohlkolbens ausgebildet und endseitig an dem Kolbenkörper befestigt ist. Die Schmierdüse verjüngt sich konisch zu dem distalen Ende des Hohlkolbens. Die konische Verjüngung ermöglicht eine fokussierte Schmierstoffabgabe, was zu einer effizienten Nutzung des Schmiermittels und einer Reduzierung von Verschwendung führt. Insbesondere kann die Schmierdüse in eine komplementär geformte Öffnung der Schmierstelle eindringen und hierdurch einen verlustfreien Übertritt von Schmierstoff in die Schmierstelle sicherstellen. Die Konizität erlaubt zudem eine gewisse Selbstzentrierung des Hohlkolbens an der jeweiligen Schmierstelle.

Sofern die Schmierdüse vorhanden ist, kann es weiter vorteilhaft sein, wenn die Schmierdüse von einem Elastomer gebildet ist. Bei dieser Ausgestaltung kann sich die Schmierdüse elastisch verformen und dadurch an die Form der Schmierstelle anpassen und einen zumindest im Wesentlichen dichten Anschluss bereitstellen. Es hat sich gezeigt, dass bei einer solchen Ausführung ein unbeabsichtigter Austritt von Schmierstoff gegenüber einer Ausführung der Schmierdüse aus Metall reduziert ist. Überdies bietet die Verwendung eines Elastomers zur Bildung der Schmierdüse eine hohe Flexibilität und Anpassungsfähigkeit an unterschiedliche Schmierstellen, was zu einer verbesserten Kontaktfläche und Schmierstoffverteilung führt. Ferner bietet das Elastomer eine gewisse Nachgiebigkeit, die dazu beiträgt, Beschädigungen an der Schmierdüse oder den Schmierstellen bei Kontakt zu vermeiden, was die Wartungskosten senkt und die Betriebssicherheit erhöht. Bevorzugt ist die von einem Elastomer gebildete Schmierdüse mittels eines Klemmrings an dem Kolbenkörper des Hohlkolbens befestigt. Die Schmierdüse kann bei dieser Ausgestaltung besonders einfach ausgetauscht werden.

In einer Ausführungsform der Appliziereinheit weist der Hohlkolben einen radial vorstehenden Anschlag auf, vorzugsweise in Form eines Anschlagrings, wobei der Anschlag dazu vorgesehen und eingerichtet ist, an zugeordneten Anschlagflächen des Gehäuses zur Anlage zu gelangen. Bevorzugt ist der Anschlag ungeachtet der Stellung des Hohlkolbens innerhalb des Gehäuses angeordnet. Mittels des Anschlags ist eine Bewegung des Hohlkolbens relativ zu dem Gehäuse in Richtung parallel zu der Längsachse des Hohlkolbens auf einen Bewegungsspielraum beschränkt. Dieser Bewegungsspielraum beschreibt mithin einen Hub des Hohlkolbens, den dieser zwischen seiner eingefahrenen und seiner ausgefahrenen Stellung ausführen kann. Eine Anlage des Anschlags an einer proximalen Anschlagfläche des Gehäuses definiert die eingefahrene Stellung des Hohlkolbens, während eine Anlage des Anschlags an einer distalen Anschlagfläche des Gehäuses die ausgefahrene Stellung des Hohlkolbens definiert. Durch Wirkung der Federeinrichtung wird der Hohlkolben in Abwesenheit äußerer Kräfte so weit aus dem Gehäuse heraus bewegt, bis der Anschlag zur Anlage an der distalen Anschlagfläche des Gehäuses gelangt. Die Federeinrichtung steht in diesem Zustand vorzugsweise (noch) unter Spannung, das heißt wirkt eine haltende Federkraft auf den Hohlkolben aus.

In einer Ausführungsform der Appliziereinheit ist diese derart ausgebildet, dass das Gehäuse einen Schmierstoffkanal aufweist, der koaxial zu dem Hohlkolben verläuft, wobei ein proximaler Endabschnitt des Hohlkolbens beweglich in dem Schmierstoffkanal des Gehäuses gelagert ist. Die koaxiale Anordnung des Schmierstoffkanals in dem Gehäuse in Bezug auf den Hohlkolben ermöglicht eine direkte und störungsfreie Zuführung des Schmierstoffs zu dem Hohlkolben, was zu einer verbesserten Schmierleistung führt. Da sich der Schmierstoffkanal des Hohlkolbens entlang der gesamten Länge des Hohlkolbens erstreckt, mündet der Schmierstoffkanal des Hohlkolbens an dessen proximalem Ende bei dieser Ausgestaltung direkt in den Schmierstoffkanal des Gehäuses. Der Schmierstoff kann bei dieser Ausführung folglich "von hinten" in das Gehäuse bzw. dessen Schmierstoffkanal gefördert werden und von dort direkt an dem proximalen Ende des Hohlkolbens in den Schmierstoffkanal des Hohlkolbens übertreten. Ein Außendurchmesser des Hohlkolbens in dessen Endabschnitt ist vorzugsweise derart auf einen Innendurchmesser des Schmierstoffkanals des Gehäuses abgestimmt, dass der Endabschnitt des Hohlkolbens gleitend innerhalb des Schmierstoffkanals des Gehäuses geführt ist. Die Lagerung des proximalen Endabschnitts des Hohlkolbens in dem Schmierstoffkanal des Gehäuses trägt somit zu einer stabilen Führung und Positionierung des Hohlkolbens bei, was die Präzision und Zuverlässigkeit der Schmierstoffapplikation erhöht.

Sofern das Gehäuse den beschriebenen Schmierstoffkanal aufweist, ist eine solche Ausgestaltung der Appliziereinheit weiter von Vorteil, bei der das Federlager von einer in den Schmierstoffkanal des Gehäuses eingeschraubten Hohlschraube gebildet ist. Diese ermöglicht es, dass Schmierstoff ausgehend von einem proximalen Ende des Schmierstoffkanals des Gehäuses durch das Federlager (das heißt die Hohlschraube) hindurch dem Hohlkolben bzw. dem Schmierstoffkanal des Hohlkolbens zuführbar ist. Insbesondere kann das Federlager bei dieser Ausgestaltung bei seiner Montage von einem proximalen Ende des Schmierstoffkanals des Gehäuses her in den Schmierstoffkanal eingeschraubt werden und dabei die Federeinrichtung zwischen sich und dem Hohlkolben einschließen. Die Federeinrichtung ist bei dieser Ausgestaltung bevorzugt von einer Spiralfeder gebildet, die im Zuge der Montage des Federlagers mit Druckspannung zwischen dem Federlager und dem Hohlkolben vorgespannt wird. Mittels einer Positionierung des Federlagers in längsachsparallele Richtung des Schmierstoffkanals des Gehäuses bzw. des Hohlkolbens kann die Spannung der Federeinrichtung besonders einfach eingestellt werden. Die Verwendung einer in den Schmierstoffkanal eingeschraubten Hohlschraube als Federlager ermöglicht überdies eine kompakte und platzsparende Konstruktion der Appliziereinheit.

Die zugrunde liegende Aufgabe wird ferner mittels einer Schmiervorrichtung für ein System zur automatischen Schmierung von Schmierstellen einer Gelenkkette mit den Merkmalen des Anspruchs 7 gelöst. Vorteilhafte Ausgestaltungen ergeben sich aus den zugehörigen Unteransprüchen, der Beschreibung sowie dem Ausführungsbeispiel.

Die Schmiervorrichtung umfasst eine Basis, einen Grundkörper, der linear entlang einer Bewegungsachse beweglich an der Basis gelagert ist, und eine Appliziereinheit, die mittelbar oder unmittelbar an dem Grundkörper gelagert ist. Die Basis steht entweder mittelbar oder unmittelbar auf einem Untergrund auf. Besonders vorteilhaft ist eine Ausgestaltung, bei der die Bewegungsachse horizontal orientiert ist. Der Grundkörper kann beispielsweise und vorzugsweise mittels einer Rollenlagerung oder einer Gleitlagerung an der Basis gelagert sein, sodass der Grundkörper möglichst reibungsarm relativ zu der Basis vor und zurück bewegbar ist. Die Appliziereinheit ist gemäß der vorliegenden Erfindung oder einer ihrer vorteilhaften Ausgestaltungen ausgestaltet. Dabei ist die Längsachse des Hohlkolbens der Appliziereinheit parallel zu der Bewegungsachse orientiert.

Die sich durch die Schmiervorrichtung ergebenden Vorteile sind vorstehend bereits im Zusammenhang mit der Appliziereinheit dargelegt und ergeben sich analog. Insbesondere ist es möglich, die Schmierung einer Gelenkkette unter Verwendung der Schmiervorrichtung zu automatisieren, wobei ein ungewünschter Austritt ("Nachlauf") von Schmierstoff an der Kolbenspitzes des Hohlkolbens der Appliziereinheit nach erfolgter Schmierung einer jeweiligen Schmierstelle vermieden wird. Die Lagerung der Appliziereinheit an dem Grundkörper ermöglicht dabei einen besonders einfachen Bewegungsablauf, der nachstehend beschrieben ist. Die Ausrichtung der Bewegungsachse parallel zu der Längsachse des Hohlkolbens ermöglicht die Bewegung des Hohlkolbens relativ zu dem Gehäuse der Appliziereinheit allein infolge des Antriebs des Grundkörpers in Kombination mit dem Anschlag des Hohlkolbens an der jeweiligen Schmierstelle.

Um die Appliziereinheit (genauer: ihren Hohlkolben) in Kontakt mit der Schmierstelle zu bringen, wird der Grundkörper mitsamt der daran angeordneten Appliziereinheit relativ zu der Basis translatorisch, nämlich entlang der Bewegungsachse, bewegt. Wie vorstehend dargelegt, erfolgt dies bevorzugt in horizontale Richtung. Die Bewegung des Grundkörpers treibt gemäß vorstehender Erläuterung die Bewegung des Hohlkolbens von seiner ausgefahrenen Stellung in seine eingefahrene Stellung an, nachdem der Hohlkolben im Zuge der Bewegung mit seiner distalen Kolbenspitze an der jeweiligen Schmierstelle anschlägt. Die Bewegung des Hohlkolbens relativ zu dem Gehäuse der Appliziereinheit findet parallel zu der Bewegungsachse statt, entlang der sich der Grundkörper relativ zu der Basis bewegt. Bei umgekehrter Bewegung des Grundkörpers in von der Schmierstelle abgewandte Richtung wird der Hohlkolben durch Wirkung der Federeinrichtung gemäß vorstehender Erläuterung wieder aus dem Gehäuse ausgefahren und in seine ausgefahrene Stellung überführt. Letztere Bewegung ist gemäß vorstehender Erläuterung für den Aufbau des Unterdrucks in dem Gehäuse der Appliziereinheit wesentlich, der zu dem gewünschten "Einsaugen" des Schmierstoffs an der Kolbenspitze des Hohlkolbens führt und auf diese Weise einen versehentlichen Austritt von Schmierstoff nach erfolgter Schmierung vermeiden hilft.

In einer Ausführungsform der Schmiervorrichtung ist die Appliziereinheit unter Ausbildung von zwei Rotationsfreiheitsgraden an dem Grundkörper gelagert, wobei der erste Rotationsfreiheitsgrad eine Drehbewegung der Appliziereinheit relativ zu der Basis um eine horizontale Rotationsachse erlaubt, die senkrecht zu einer die Längsachse des Hohlkolbens beinhaltenten, vertikalen Längsebene orientierte ist, und wobei der zweite Rotationsfreiheitsgrad eine Drehbewegung der Appliziereinheit relativ zu der Basis um eine vertikale Rotationsachse erlaubt. Beispielsweise und vorzugsweise kann der Grundkörper eine kardanische Aufhängung bereitstellen, mittels der die Appliziereinheit mittelbar oder unmittelbar gelagert ist. Die vertikale Rotationsachse erstreckt sich vorzugsweise in der vertikalen Längsebene, die die Längsachse des Hohlkolbens beinhaltet.

In einer vorteilhaften Ausgestaltung kann der Grundkörper mindestens zweiteilig (das heißt aus zwei Teilen oder aus mehr als zwei Teilen) ausgebildet sein, wobei zwischen einem ersten Teil des Grundkörpers und einem zweiten Teil des Grundkörpers einer der beiden Rotationsfreiheitsgrade eingerichtet ist. Beispielsweise und vorzugsweise ist der erste Teil des Grundkörpers entlang der Bewegungsachse linear beweglich an der Basis gelagert, wodurch der Grundkörper als solcher insgesamt linear beweglich an der Basis gelagert ist. Der zweite Teil des Grundkörpers ist unter Ausbildung einer der genannten Rotationsachsen an dem ersten Teil des Grundkörpers gelagert, beispielsweise unter Ausbildung der vertikalen Rotationsachse. Der andere der beiden Rotationsfreiheitsgrade ist zwischen dem zweiten Teil des Grundkörpers und der Appliziereinheit eigerichtet.

Hierbei ist es vorteilhaft, wenn die Appliziereinheit nicht unmittelbar an dem Grundkörper ist, sondern mittelbar über das Absperrventil des Systems für die Schmierung. Das Absperrventil ist bei dieser Ausgestaltung, die auch im untenstehenden Ausführungsbeispiel verwirklicht ist, unmittelbar an dem Grundkörper (im Ausführungsbeispiel: einem dritten Teil des Grundkörpers) gelagert, wobei der dritte Teil des Grundkörpers unter Ausbildung des zweiten Rotationsfreiheitsgrads an dem zweiten Teil des Grundkörpers gelagert ist. Alternativ ist es ebenso denkbar, dass der Grundkörper nur zwei Teile aufweist (und kein drittes oder weiteres), wobei der zweite Rotationsfreiheitsgrad unmittelbar zwischen dem Absperrventil und dem zweiten Teil des Grundkörpers ausgebildet ist. Je nach Ausgestaltung ist demzufolge beispielsweise der dritte Teil des Grundkörpers oder das Absperrventil unter Ausbildung der horizontalen Rotationsachse an dem zweiten Teil des Grundkörpers gelagert. Insbesondere bei letztgenannter Variante ist die Appliziereinheit an das Absperrventil angeschlossen und mithin über das Absperrventil (mittelbar) an dem Grundkörper gelagert. Im Ergebnis kann die Appliziereinheit um beide Rotationsachsen relativ zu der Basis bewegt werden.

Eine Ausgestaltung, bei der der Grundkörper insgesamt drei Teile aufweist, ist ebenfalls denkbar. Hierbei liegt der erste Rotationsfreiheitsgrad zwischen dem ersten Teil und dem zweiten Teil vor, währen der zweite Rotationsfreiheitsgrad zwischen dem zweiten Teil und dem dritten Teil vorliegt. Bei dieser Ausgestaltung ist die Appliziereinheit an dem dritten Teil des Grundkörpers gelagert. Dies kann optional über das Absperrventil erfolgen. Der erste Teil des Grundkörpers ist in der beschriebenen Weise beweglich an der Basis gelagert.

Die Lagerung der Appliziereinheit unter Beibehalten der beiden Rotationsfreiheitsgrade ermöglicht eine gewisse Selbstausrichtung der Kolbenspitze relativ zu der jeweiligen Schmierstelle im Zuge des Kontakts zwischen beiden Teilen. Mit anderen Worten kann sich die Appliziereinheit selbst "zurechtrücken", wenn die Kolbenspitze des Hohlkolbens mit der jeweiligen Schmierstelle in Eingriff gerät. Hierdurch erübrigt sich eine überaus exakte Ausrichtung der Appliziereinheit relativ zu der jeweils zu schmierenden Schmierstelle vor Beginn einer Schmierung, wodurch die Betriebssicherheit des Systems bzw. der Schmiervorrichtung erhöht ist. Mithin ermöglicht die Lagerung der Appliziereinheit mit zwei Rotationsfreiheitsgraden eine flexible Ausrichtung der Appliziereinheit, was eine präzise Anpassung an unterschiedliche Schmierstellen ermöglicht.

Die Drehbewegungen der Appliziereinheit um die genannten Rotationsachsen sind bevorzugt mittels Anschlägen auf einen Bewegungsspielraum begrenzt, der beispielsweise und vorzugsweise für beide Rotationsachsen auf ±10°, vorzugsweise auf ±5°, um eine Mittelstellung begrenzt sein kann. Der Grundkörper kann bevorzugt über Rückstellfedern verfügen, die in Abwesenheit äußerer Kräfte die Appliziereinheit auf eine neutrale Mittelstellung relativ zu der Basis ausrichten, sodass die Appliziereinheit vor und nach Eingriff mit einer Schmierstelle wieder diese neutrale Mittelstellung einnimmt. Beispielsweise und vorzugsweise können die Rückstellfedern zwischen den Teilen des Grundkörpers wirken und letztere dadurch in Abwesenheit äußerer Kräfte relativ zueinander ausrichten.

Die zugrunde liegende Aufgabe wird ferner mittels eines Systems zur Schmierung von Schmierstellen einer Gelenkkette mit den Merkmalen des Anspruchs 9 gelöst. Vorteilhafte Ausgestaltungen ergeben sich aus den zugehörigen Unteransprüchen, der Beschreibung sowie dem Ausführungsbeispiel.

Das System zur Schmierung umfasst eine Schmiervorrichtung, eine Schmierstoffpumpe zur Förderung von Schmierstoff, ein Absperrventil, einen Fahrantrieb und einen Schmierstofftank zur Vorhaltung von Schmierstoff. Die Schmiervorrichtung kann beispielsweise und vorzugsweise gemäß der vorliegenden Erfindung oder einer ihrer vorteilhaften Ausgestaltungen ausgebildet sein. Die Schmiervorrichtung weist eine Basis, einen an der Basis linear beweglich gelagerten Grundkörper und eine an dem Grundkörper mittelbar oder unmittelbar angeordnete Appliziereinheit auf. Die Appliziereinheit ist gemäß der vorliegenden Erfindung oder einer ihrer vorteilhaften Ausgestaltungen ausgebildet.

Die Schmierstoffpumpe ist dazu vorgesehen und eingerichtet, Schmierstoff von dem Schmierstofftank zu der Appliziereinheit zu fördern, sodass Schmierstoff mittels der Appliziereinheit einer jeweiligen Schmierstelle zuführbar ist. Der Schmierstofftank hält einen Vorrat von Schmierstoff bereit, der ggf. manuell nachzufüllen ist. Insbesondere ist es denkbar, dass als Schmierstofftank unmittelbar ein als solcher käuflich erwerbbarer Schmierstoffkanister verwendet wird, der an eine jeweilige Schmierstoffleitung des Systems angeschlossen wird.

Das Absperrventil ist wechselweise zwischen einer Geschlossenstellung und einer Offenstellung umschaltbar. Bei Vorliegen in der Geschlossenstellung ist eine strömungstechnische Verbindung zwischen dem Schmierstofftank und der Appliziereinheit blockiert. Ein Einströmen und Nachströmen von Schmierstoff in die Appliziereinheit ist in diesem Zustand nicht möglich. Ebenso ist ein Rückströmen von Schmierstoff von der Appliziereinheit in Richtung des Schmierstofftanks nicht möglich. Bei Vorliegen in der Offenstellung ist die strömungstechnische Verbindung zwischen dem Schmierstofftank und der Appliziereinheit freigegeben. Auf diese Weise kann mittels der Schmierstoffpumpe der Appliziereinheit gezielt Schmierstoff zugeführt werden, damit eine jeweilige Schmierstelle versorgt werden kann.

Das Absperrventil kann beispielsweise und vorzugsweise unmittelbar an dem Grundkörper der Schmiervorrichtung gelagert sein, wie vorstehend bereits als mögliche Ausgestaltung beschrieben ist. Dies hat den Vorteil, dass die Appliziereinheit unmittelbar an das Absperrventil angeschlossen sein kann, wobei die Appliziereinheit bei dieser Ausgestaltung über das Absperrventil mittelbar an dem Grundkörper gelagert ist.

Der Fahrantrieb ist dazu vorgesehen und eingerichtet, den Grundkörper der Schmiervorrichtung linear entlang einer (vorzugsweise horizontal orientierten) Bewegungsachse relativ zu der Basis der Schmiervorrichtung zu bewegen, wodurch der Grundkörper unter Zurücklegung einer Bewegungsstrecke zwischen einer Applizierstellung und einer Ruhestellung bewegbar ist. Bei Vorliegen des Grundkörpers in der Applizierstellung befindet sich die der Hohlkolben der Appliziereinheit in Eingriff mit einer jeweiligen Schmierstelle. Der Grundkörper wurde zur Überführung in die Applizierstellung mittels des Fahrantriebs in Richtung auf die jeweilige Schmierstelle bzw. die jeweilige Gelenkkette zu bewegt. Im Zuge dieser Bewegung tritt gemäß vorstehender Erläuterung der Hohlkolben mit seiner Kolbenspitze in Kontakt mit der Schmierstelle, woraufhin der Hohlkolben entgegen der Federkraft der Federeinrichtung der Appliziereinheit in das Gehäuse der Appliziereinheit eingedrückt wird. Dieses Eindrücken des Hohlkolbens geschieht in Richtung seiner Längsachse, die parallel zu der Bewegungsachse orientiert ist, entlang der der Grundkörper mittels des Fahrantriebs relativ zu der Basis bewegt wird. Nach erfolgter Schmierung wird der Grundkörper entlang der Bewegungsachse zurück in seine Ruhestellung bewegt, bei deren Vorliegen die Appliziereinheit nicht in Kontakt mit einer Schmierstelle steht. Auf den Hohlkolben wird in diesem Zustand, das heißt bei Vorliegen des Grundkörpers in seiner Ruhestellung, abseits der Federkraft der Federeinrichtung keine äußere Kraft ausgeübt, sodass der Hohlkolben durch Wirkung der Federeinrichtung in seiner ausgefahrenen Stellung gehalten ist.

Die Vorteile des Systems ergeben analog zu den Vorteilen der Appliziereinheit gemäß der vorliegenden Erfindung und der Schmiervorrichtung gemäß der vorliegenden Erfindung. Mithin ermöglicht das System eine automatische Schmierung von Gelenkketten, wobei mittels des Fahrantriebs der Grundkörper bewegt und hierdurch die Appliziereinheit in Kontakt mit den Schmierstellen der Gelenkkette gebracht werden können. Dieser Vorgang kann ebenso wie das Umschalten des Absperrventils zwischen der Geschlossenstellung und der Offenstellung und wie das Fördern des Schmierstoffs mittels der Schmierstoffpumpe elektronisch gesteuert und mithin automatisch erfolgen. Hierzu kann das System beispielsweise und vorzugsweise über eine entsprechend Steuereinrichtung verfügen, mittels der der Betrieb der Komponenten des Systems steuerbar sind. Einer Bedienung oder Betreuung des Schmierens einer jeweiligen Gelenkkette durch einen Maschinenführer bedarf es dann nicht mehr. Ein unbeabsichtigter Austritt von Schmierstoff an der Kolbenspitze des Hohlkolbens nach erfolgter Schmierung einer Schmierstelle wird durch die beschriebene Ausgestaltung und Funktionsweise der Appliziereinheit vermieden, sodass es einer manuellen Nacharbeitung einer geschmierten Schmierstelle nicht bedarf.

Auf diese Weise kann eine Gelenkkette besonders einfach automatisch geschmiert werden. Hierzu ist es besonders vorteilhaft, wenn die Gelenkkette zum Zweck der Schmierung in einem Wartungsbetrieb antreibbar ist bzw. angetrieben wird. Dieser sieht vor, dass die Gelenkkette getaktet weiterbewegt wird, sodass nacheinander alle Schmierstellen relativ zu der Appliziereinheit bzw. deren Hohlkolben, das heißt fluchtend mit der Längsachse des Hohlkolbens, ausgerichtet werden. Während eines Schmiervorgangs einer Schmierstelle steht die Gelenkkette still und bewegt sich erst weiter, wenn der Schmiervorgang abgeschlossen ist. Zu Beginn und zum Ende eines jeden Schmiervorgangs befinden sich der Grundkörper in seiner Ruhestellung und der Hohlkolben in seiner ausgefahrenen Stellung. Sobald die nächste Schmierstelle ihre Position relativ zu der Appliziereinheit eingenommen hat, wird der nächste Schmiervorgang gestartet und beendet. Dieses Prozedere wird so oft wiederholt, bis alle Schmierstellen, die zur Schmierung vorgesehen sind, vorzugsweise sämtliche Schmierstellen der jeweiligen Gelenkkette, mit Schmierstoff versorgt wurden. Der Wartungsbetrieb ist daraufhin beendet und die Gelenkkette kann wieder für den bestimmungsgemäßen Betrieb der jeweils übergeordneten Maschine (beispielsweise eines Doppelendprofilers) verwendet werden.

In einer Ausführungsform des Systems ist der Fahrantrieb von einem pneumatischen Antrieb gebildet. Die Verwendung eines pneumatischen Antriebs für den Fahrantrieb bietet eine robuste und wartungsarme Lösung, die sich durch eine hohe Zuverlässigkeit und eine einfache Steuerbarkeit auszeichnet. Aufgrund der inhärenten Sicherheit von pneumatischen Systemen, insbesondere in Umgebungen mit erhöhtem Brand- oder Explosionsrisiko, erhöht der Einsatz eines pneumatischen Fahrantriebs die Betriebssicherheit des Gesamtsystems.

Der pneumatische Antrieb kann beispielsweise und vorzugsweise einen doppelwirkenden Pneumatikzylinder umfassen. Ebenfalls ist es denkbar, dass der Fahrantrieb eine Kombination aus einem einfach wirkenden Pneumatikzylinder mit einer mechanischen Rückstellfeder umfasst, wobei mittels des Pneumatikzylinders der Grundkörper entgegen einer Federkraft der Rückstellfeder in seine Applizierstellung bewegt wird und nach erfolgter Schmierung durch Ablassen des pneumatischen Drucks in dem Pneumatikzylinder der Grundkörper durch Wirkung der Federkraft der Rückstellfeder wieder zurück in seine Ruhestellung bewegt wird.

In einer Ausführungsform des Systems ist das Absperrventil ein pneumatisches Absperrventil, das pneumatisch zwischen seiner Offenstellung und seiner Geschlossenstellung umschaltbar ist. Die Verwendung eines pneumatischen Absperrventils ermöglicht eine schnelle und zuverlässige Umschaltung zwischen der Offenstellung und der Geschlossenstellung, was zu einer erhöhten Effizienz des Systems beiträgt. Durch die pneumatische Betätigung des Absperrventils wird eine hohe Präzision bei der Steuerung des Durchflusses erreicht, was die Genauigkeit des Gesamtsystems verbessert. Die pneumatische Steuerung des Absperrventils erfordert keine elektrischen Komponenten in unmittelbarer Nähe, was die Sicherheit in potenziell explosiven oder feuchten Umgebungen erhöht.

In einer Ausführungsform des Systems weist die Reinigungsvorrichtung einen Kompressor und mindestens eine Düse auf, die mit dem Kompressor strömungstechnisch verbunden ist, sodass von dem Kompressor bereitgestellte Druckluft der Düse zuleitbar und an der Düse abstrahlbar ist. Hierbei ist die Düse derart ausgerichtet ist, dass eine Hauptabstrahlrichtung, in die die Druckluft hauptsächlich ausgehend von der Düse abstrahlbar ist, zumindest im Wesentlichen parallel zu der Längsachse des Hohlkolbens der Appliziereinheit orientiert ist. Ferner ist die Düse zumindest im Wesentlichen in vertikale Richtung betrachtet auf dem gleichen Höhenniveau wie die Kolbenspitze des Hohlkolbens angeordnet. Ferner ist die Düse in horizontale Richtung relativ zu der Kolbenspitze versetzt angeordnet. Ferner ist es vorteilhaft, wenn eine Düsenspitze der Düse in Richtung senkrecht zu der Längsachse des Hohlkolbens fluchtend mit der Kolbenspitze des Hohlkolbens ausgerichtet ist, das heißt horizontal neben der Kolbenspitze angeordnet ist.

Die Reinigungsvorrichtung ist besonders gut dazu geeignet, eine Schmierstelle vor und/oder nach erfolgter Schmierung zu reinigen. Vor einer Schmierung können beispielsweis Prozessstäube oder sonstige Verunreinigungen von der Schmierstelle entfernt werden, damit diese nicht im Zuge der Schmierung in die Schmierstelle eingedrückt werden. Nach erfolgter Schmierung können etwaige Rückstände abgereinigt werden.

Die Anordnung der mindestens einen Düse erlaubt eine besonders einfache Automatisierung der Reinigung, da die Düse genau so angeordnet und ausgerichtet sein kann, dass die Hauptabstrahlrichtung der Druckluft auf eine Schmierstelle ausgerichtet ist, wenn eine benachbarte Schmierstelle bestimmungsgemäß derart relativ zu der Appliziereinheit ausgerichtet ist, dass die Schmierung der benachbarten Schmierstelle gemäß vorstehender Erläuterung erfolgen kann. Auf diese Weise kann die Reinigung der Schmierstellen ohne zusätzliche Unterbrechung oder Verzögerung des jeweiligen Schmiervorgangs erfolgen.

In besonders bevorzugter Ausgestaltung weist die Reinigungsvorrichtung zwei Düsen auf, wobei in Bewegungsrichtung der Gelenkkette betrachtet eine Düse vor und eine Düse hinter der Appliziereinheit angeordnet sind. Die Düsen befinden sich in horizontale Richtung sowie senkrecht zu der Längsachse des Hohlkolbens betrachtet jeweils im gleichen Abstand von der Kolbenspitze des Hohlkolbens. Die Düsen und die Längsachse des Hohlkolbens sind hierbei vorzugweise in einer gemeinsamen horizontalen Ebene angeordnet, das heißt auf dem gleichen Höhenniveau. Die Nutzung von zwei Düsen ermöglicht eine Reinigung der Schmierstellen sowohl vor als auch nach erfolgter Schmierung, ohne dass der Schmiervorgang der Gelenkkette als solcher unterbrochen werden muss.

Die Erfindung wird ferner mittels eines Doppelendprofilers mit den Merkmalen des Anspruchs 13 gelöst. Vorteilhafte Ausgestaltungen ergeben sich aus der Beschreibung sowie dem Ausführungsbeispiel.

Der Doppelendprofiler ist zur gleichzeitigen Bearbeitung einander gegenüberliegender Enden von Werkstücken vorgesehen und eingerichtet. Er umfasst zwei endlos umlaufende, parallel zueinander orientierte sowie in horizontale Richtung voneinander beabstandete Transportketten, die jeweils von einer Gelenkkette gebildet sind. Die Transportketten dienen jeweils zum Transport der Werkstücke in eine Vorschubrichtung entlang einer Bearbeitungsstrecke ausgebildet sind. Die Transportketten können beispielsweise und vorzugsweise mit in sich ebenen Werkstückträgerflächen ausgebildet sein, auf denen ein Werkstück lagerbar ist. Ferner umfasst der Doppelendprofiler mindestens einen Antrieb zum Antrieb der Transportketten sowie mindestens zwei Bearbeitungswerkzeuge zur synchronen Bearbeitung der einander gegenüberliegenden Enden der Werkstücke. Im Betrieb des Doppelendprofilers werden die Transportketten synchron angetrieben, das heißt die Transportketten laufen mit gleicher Geschwindigkeit um.

Wie im Zusammenhang mit dem Stand der Technik bereits erläutert ist, sind die Transportketten in sich geschlossen und können umlaufend angetrieben werden. Ein Untertrum und ein Obertrum einer jeweiligen Transportkette sind vertikal übereinander geführt, wobei die Transportkette an endseitigen Umlenkstationen jeweils um eine horizontal orientierte Umlenkachse umgelenkt wird. Die Kettenglieder der jeweiligen Transportkette bewegen sich während eines Betriebs der Transportkette in einer vertikalen Ebene ("Kettenebene"). Die Transportketten sind parallel zueinander orientiert sowie senkrecht zu der Kettenebene betrachtet voneinander beabstandet angeordnet. Zur Bearbeitung von Werkstücken werden diese derart auf die Werkstückträgerflächen der Transportketten gelegt, dass sie auf beiden Transportketten gleichzeitig aufliegen. Hierbei überbrückt das Werkstück (beispielsweise eine Möbelplatte) den Zwischenraum zwischen den Transportketten. Die Transportketten werden mittels mindestens eines Antriebs synchron betrieben, sodass das jeweilige Werkstück entlang einer Bearbeitungsstrecke transportiert wird. Im Zuge der Bewegung des Werkstücks entlang der Bearbeitungsstrecke wird das Werkstück an Bearbeitungswerkzeugen entlanggeführt, mittels derer das Werkstück bearbeitet werden kann. Hierbei kann es sich beispielsweise um eine Säge oder einen Fräser handeln. Dabei ist jedem Ende des Werkstücks bzw. jeder Transportkette mindestens ein Bearbeitungswerkzeug zugeordnet, sodass die einander gegenüberliegenden Enden des Werkstücks synchron bearbeitet werden können.

Der Doppelendprofiler ist mit einem ein System zur Schmierung ausgestattet, mittels dessen Schmierstellen mindestens einer der beiden Transportketten schmierbar sind. Das System ist gemäß der vorliegenden Erfindung oder einer ihrer vorteilhaften Ausgestaltungen ausgebildet. Die sich hierdurch ergebenden Vorteile sind vorstehend bereits dargelegt. Insbesondere kann die Schmierung der mindestens einen Transportkette automatisiert erfolgen, ohne dass ein Benutzer des Doppelendprofilers manuell tätig werden muss.

In besonders bevorzugter Ausgestaltung umfasst das System zwei Schmiervorrichtungen, von denen jeweils eine einer der Transportketten zugeordnet ist. Auf diese Weise können beide Transportketten automatisch geschmiert werden.

In verfahrenstechnischer Sicht wird die zugrunde liegende Aufgabe mittels eines Verfahrens mit den Merkmalen des Anspruchs 14 gelöst. Vorteilhafte Ausgestaltungen des Verfahrens ergeben sich aus dem zugehörigen Unteranspruch, der Beschreibung und dem Ausführungsbeispiel.

Das Verfahren dient der Schmierung von Schmierstellen einer Gelenkkette, insbesondere einer als Transportkette ausgebildeten Gelenkkette eines Doppelendprofilers, unter Verwendung eines Systems gemäß der vorliegenden Erfindung oder einer ihrer vorteilhaften Ausgestaltungen.

Das Verfahren umfasst die folgenden Verfahrensschritte a) bis e):
a) Die Gelenkkette wird in eine Wartungsstellung gebracht, in der eine jeweils zu schmierende Schmierstelle der Gelenkkette zumindest im Wesentlichen fluchtend zu der Längsachse des Hohlkolbens der Appliziereinheit der Schmiervorrichtung des Systems sowie in einem Abstand von dem Hohlkolben angeordnet ist.

Bei diesem Verfahrensschritt kann die Gelenkkette beispielsweise und vorzugsweise derart angetrieben werden, dass sich eine Schmierstelle relativ zu der feststehenden Schmiervorrichtung bewegt. Sobald die Schmierstelle die beschriebene Relativposition erreicht hat, wird der Antrieb der Gelenkkette beendet, sodass die Gelenkkette und die Schmiervorrichtung relativ zueinander stillstehen.
b) Der Grundkörper der Schmiervorrichtung wird mitsamt der daran (mittelbar oder unmittelbar) angeordneten Appliziereinheit der Schmiervorrichtung mittels des Fahrantriebs ausgehend von seiner Ruhestellung linear relativ zu der Basis entlang der Bewegungsachse bewegt bis er seine Applizierstellung erreicht, wobei im Zuge dieser Bewegung des Grundkörpers entlang der Bewegungsachse nach Zurücklegung eines Teils der Bewegungsstrecke zwischen der Ruhestellung und der Applizierstellung zunächst die Kolbenspitze des Hohlkolbens der Appliziereinheit in Kontakt mit der zu schmierenden Schmierstelle tritt und sodann bei Fortführung der Bewegung des Grundkörpers entlang der Bewegungsachse der Hohlkolben der Appliziereinheit entgegen der Federkraft der Federeinrichtung der Appliziereinheit ausgehend von seiner ausgefahrenen Stellung in seine eingefahrene Stellung überführt wird, bei deren Erreichen der Grundkörper in seiner Applizierstellung vorliegt.

Dieses Vorgehen ist eingangs bereits im Zusammenhang mit der Erläuterung der Appliziereinheit dargelegt worden. Wesentlich ist dabei, dass der Grundkörper so weit auf die Schmierstelle zu bewegt wird, dass die distale Kolbenspitze des Hohlkolbens nicht nur in Kontakt mit der Schmierstelle gerät, sondern darüber hinaus der Hohlkolben infolge des Anschlags an der Schmierstelle und die weitergehende Bewegung der Grundkörpers dazu gezwungen wird, entgegen der Federkraft der Federeinheit in das Gehäuse einzufahren und infolge dessen seine eingefahrene Stellung zu erreichen. Hierdurch wird in der beschriebenen Weise der im Inneren des Gehäuses der Appliziereinheit für den Schmierstoff zur Verfügung stehende Raum reduziert.
c) Nachdem der Grundkörper seine Applizierstellung und mithin der Hohlkolben der Appliziereinheit seine eingefahrene Stellung eingenommen haben, wird das Absperrventil von seiner Geschlossenstellung in seine Offenstellung geschaltet und danach wird die Schmierstoffpumpe aktiviert, sodass Schmierstoff von dem Schmierstofftank zu der Appliziereinheit der Schmiervorrichtung gefördert und dort an der Kolbenspitze des Hohlkolbens an die Schmierstelle übergeben wird.

Vorzugsweise sind die Formen der Schmierstelle und der Kolbenspitze bzw. Schmierdüse derart komplementär zueinander ausgebildet, dass die Kolbenspitze in eine Vertiefung der Schmierstelle eindringt, bevor der Schmierstoff gefördert wird. Auf diese Weise ist ein sauberer Übertritt des Schmierstoffs in die Schmierstelle vereinfacht. Die Ausbildung der vorstehend beschriebenen, sich konisch verjüngenden Schmierdüse, die die Kolbenspitze bildet, ist hierfür weiter vorteilhaft.
d) Nach erfolgter Übergabe des Schmierstoffs an die Schmierstelle wird die Schmierstoffpumpe deaktiviert und danach wird das Absperrventil von seiner Offenstellung zurück in seine Geschlossenstellung geschaltet.

Ein Nachfluss von Schmierstoff von dem Schmierstofftank zu der Appliziereinheit ist aufgrund des wieder in seiner Geschlossenstellung vorliegenden Absperrventils sodann ebenso blockiert wie ein Rückfluss von Schmierstoff von der Appliziereinheit in Richtung des Schmierstofftanks. Ebenso ist bevorzugt ein Nachströmen von Luft in die Appliziereinheit aus der Richtung des Schmierstofftanks blockiert. Dies ist für den gewünschten Aufbau des Unterdrucks in dem Gehäuse der Appliziereinheit von Vorteil, der im nachfolgenden Verfahrensschritt auftritt.
e) Nach der Schaltung des Absperrventils in die Geschlossenstellung wird der Grundkörper ausgehend von seiner Applizierstellung zurück in seine Ruhestellung bewegt, wobei im Zuge dieser Bewegung der Hohlkolben der Appliziereinheit durch Wirkung der Federkraft der Federeinrichtung zurück von seiner eingefahrenen Stellung in seine ausgefahrene Stellung bewegt wird.

Wie vorstehend bereits erläutert, bewirkt die Federeinrichtung, dass der Hohlkolben wieder aus dem Gehäuse heraus bewegt wird, sobald Raum hierfür besteht. Dieser entsteht infolge der Überführung des Grundkörpers entlang der parallel zu der Längsachse des Hohlkolbens orientierten Bewegungsachse zurück in seine Ruhestellung. Mit anderen Worten wird durch diese Bewegung der Abstand zwischen dem Gehäuse der Appliziereinheit und der Schmierstelle vergrößert, sodass der Hohlkolben durch Wirkung der Federeinrichtung aus dem Gehäuse herausbewegt werden kann. Die distale Kolbenspitze verbleibt zunächst in unmittelbarem Kontakt mit der Schmierstelle. Diesen Kontakt verliert die Kolbenspitze erst, wenn der Hohlkolben sich in seiner ausgefahrenen Stellung befindet und nicht weiter aus dem Gehäuse herausbewegt werden kann. Die Bewegung des Grundkörpers relativ zu der Basis zurück in die Ruhestellung ist zu diesem Zeitpunkt noch nicht beendet, sodass die weitere Bewegung des Grundkörpers zur Folge hat, dass die distale Kolbenspitze von der Schmierstelle "abdockt".

Im Zuge der Bewegung des Hohlkolbens aus dem Gehäuse der Appliziereinheit heraus wird Raum bzw. Volumen in dem Gehäuse frei, der zuvor von dem Hohlkolben (bzw. einem Teil des Hohlkolbens) eingenommen wurde. Hierdurch entsteht der beschriebene Unterdruck, der dazu führt, dass an der distalen Kolbenspitze anstehender Schmierstoff zurück in den Hohlkolben eingesogen wird. Ein unbeabsichtigter Austritt von Schmierstoff an der Kolbenspitze nach Abschluss einer jeweiligen Schmierung ist auf diese Weise unterbunden.

In bevorzugter Ausgestaltung des Verfahrens wird der Grundkörper mittels des Fahrantriebs ausgehend von seiner Applizierstellung zurück in seine Ruhestellung bewegt. Besonders vorteilhaft ist hierzu eine Ausgestaltung des Fahrantriebs in Form eines doppelwirkenden Pneumatikzylinders, wie vorstehend bereits erläutert wurde.

### Ausführungsbeispiele

Die Erfindung ist nachstehend anhand eines Ausführungsbeispiels, das in den Figuren dargestellt ist, näher erläutert. Es zeigt:
- Fig. 1:: Eine perspektivische Ansicht eines Doppelendprofilers,
- Fig. 2:: Eine perspektivische Ansicht eines Abschnitts eines Kettenaggregats des Doppelendprofilers gemäß Figur 1, wobei das Kettenaggregat eine von einer Gelenkkette gebildete Transportkette umfasst, die mit einer Schmiervorrichtung zusammenwirkt,
- Fig. 3:: Ein vergrößerte Darstellung einer Schmierstelle der Gelenkkette gemäß Figur 2, die für eine Schmierung mittels der Schmiervorrichtung gemäß Figur 2 ausgerichtet ist,
- Fig. 4:: Eine perspektivische Ansicht der Schmiervorrichtung gemäß Figur 2,
- Fig. 5:: Eine vereinfachte Darstellung eines Systems zu Schmierung von Schmierstellen einer Gelenkkette, wobei das System die Schmiervorrichtung gemäß Figur 2 umfasst,
- Fig. 6:: Eine vereinfachte perspektivische Ansicht des Systems gemäß Figur 5, dass zusätzlich mit einer Reinigungsvorrichtung ausgestattet ist,

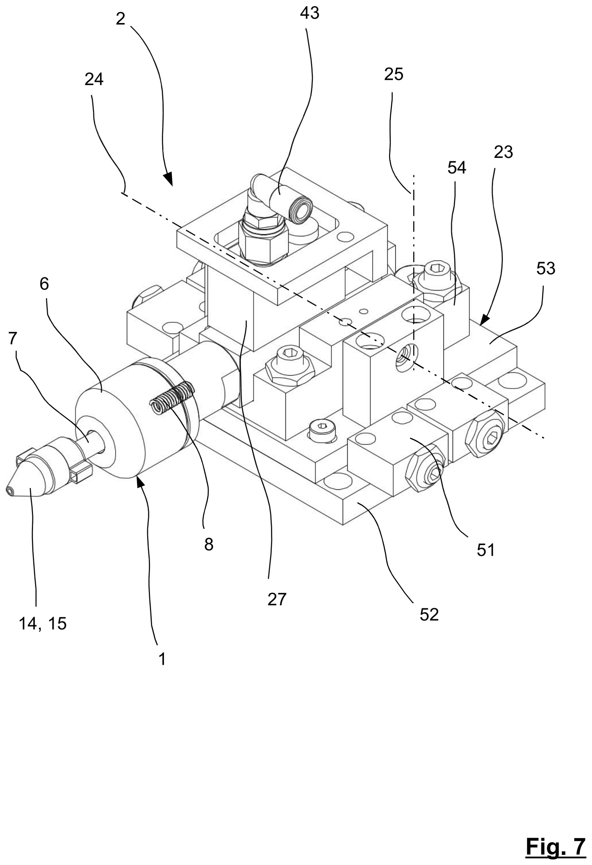

- Fig. 7:: Eine perspektivische eines Teils der Schmiervorrichtung gemäß Figur 2,
- Fig. 8:: Ein Querschnitt durch eine Appliziereinheit der Schmiervorrichtung gemäß Figur 2, wobei sich ein Hohlkolben der Appliziereinheit in einer ausgefahrenen Stellung befindet,
- Fig. 9:: Ein Querschnitt durch die Appliziereinheit gemäß Figur acht, wobei sich der Hohlkolben in einer eingefahrenen Stellung befindet,
- Fig. 10:: Ein Querschnitt durch einen Teil des Systems gemäß Figur 5, wobei der Grundkörper in seiner Ruhestellung vorliegt,
- Fig. 11:: Der Querschnitt gemäß Figur 10, wobei der Grundkörper in seiner Applizierstellung vorliegt.

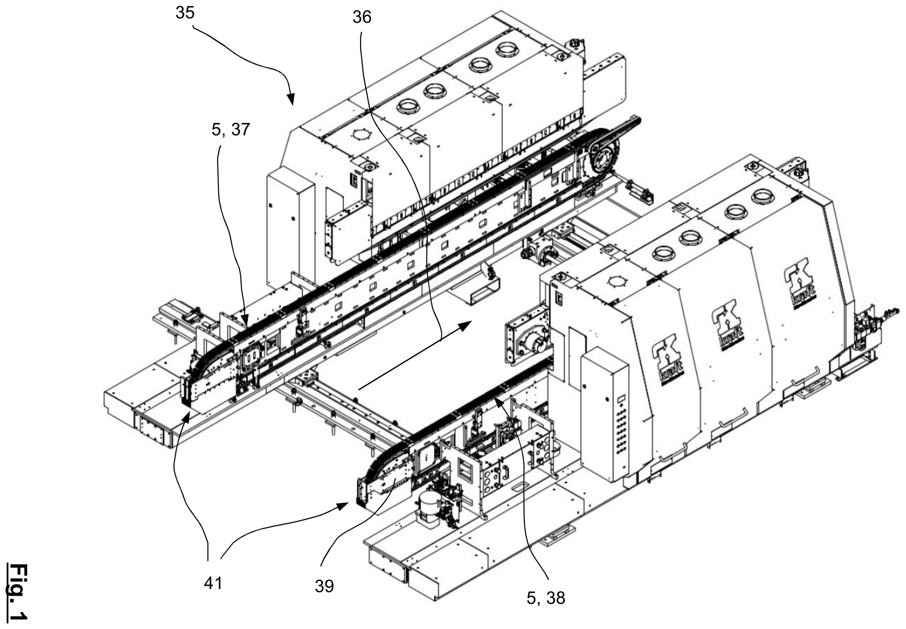

In **Figur 1** ist beispielhaft ein Doppelendprofiler **35** dargestellt, der über insgesamt zwei Kettenaggregate **41** mit jeweils einer Gelenkkette **5** verfügt. Die Gelenkketten **5** sind hier jeweils als Transportkette **37, 38** ausgebildet. Die Gelenkketten **5** umfassen jeweils eine Vielzahl von Kettengliedern **42,** die jeweils gelenkig mittels eines Verbindungsbolzens miteinander verbunden sind. Die Gelenkketten **5** sind in sich geschlossen und umlaufend antreibbar gelagert. Hierbei sind die Gelenkketten **5** derart orientiert, dass ein jeweiliges Obertrum und ein jeweiliges Untertrum sich in einer gemeinsamen vertikal orientierten Ebene ("Kettenebene") befinden. Die Gelenkketten **5** sind parallel zueinander orientiert sowie in einem senkrecht zu der Kettenebene gemessenen Abstand voneinander angeordnet. Sie werden jeweils an endseitigen Umlenkstationen **39** umgelenkt. In einem bestimmungsgemäßen Betrieb des Doppelendprofilers **35** werden die beiden Gelenkketten **5** synchron angetrieben. Ein jeweilig zu bearbeitendes Werkstück wird derart auf den Gelenkketten **5** platziert, dass einander gegenüberliegende Enden des Werkstücks auf den Gelenkketten **5** aufliegen. Der horizontale Abstand zwischen den Gelenkketten **5** wird hierbei von dem Werkstück überbrückt. Infolge des Antriebs der Gelenkketten **5** wird das Werkstück entlang einer Bearbeitungsstrecke in eine Vorschubrichtung **36** bewegt. Hierbei wird das Werkstück an mindestens einer Bearbeitungsstation vorbeigeführt. Letztere umfasst zwei nicht dargestellte Bearbeitungswerkzeuge, wobei jeweils eines der Bearbeitungswerkzeuge einem der gegenüberliegenden Enden des Werkstücks zugeordnet ist. Auf diese Weise können die Bearbeitungswerkzeuge gleichzeitig die einander gegenüberliegenden Enden des Werkstücks bearbeiten.

Die Gelenkketten **5** sind regelmäßig zur Wartung fällig. Dies betrifft insbesondere ein Abschmieren von Schmierstellen **4,** die sich jeweils an den Gelenken der Kettenglieder **42** der jeweiligen Gelenkkette **5** befinden. Dieses Abschmieren wird im Stand der Technik manuell vorgenommen, beispielsweise mittels einer Fettpresse.

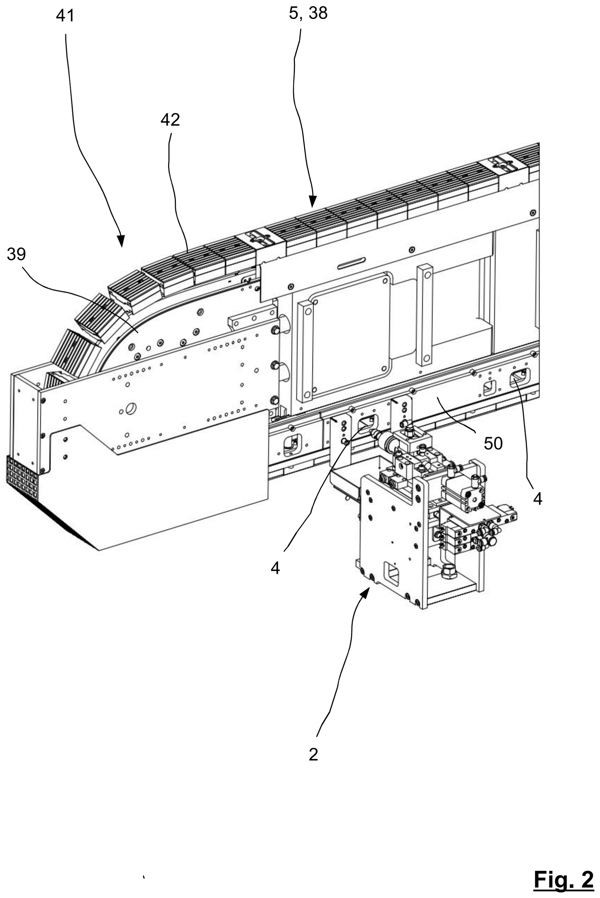

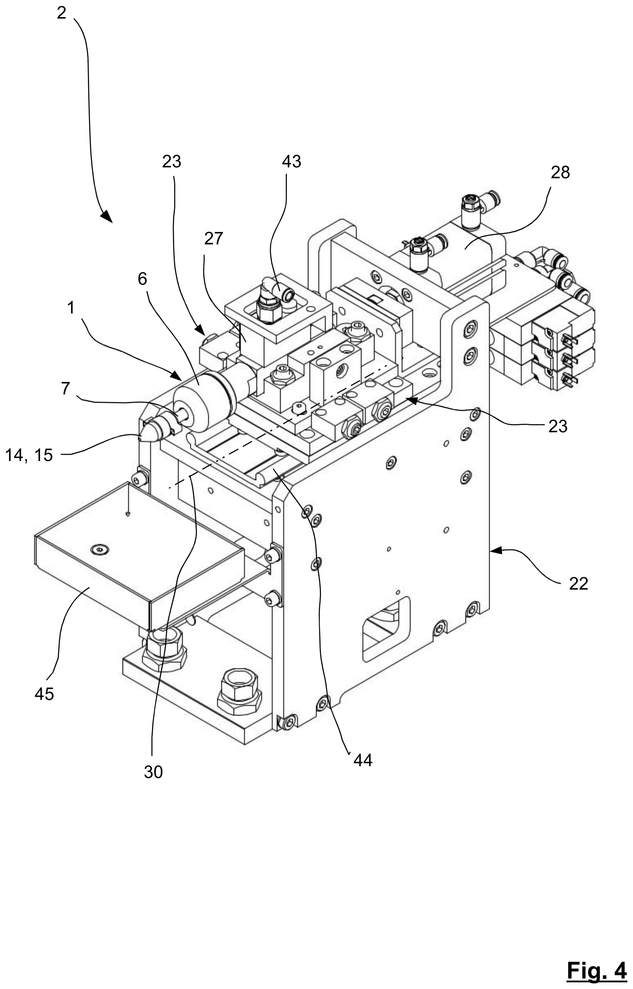

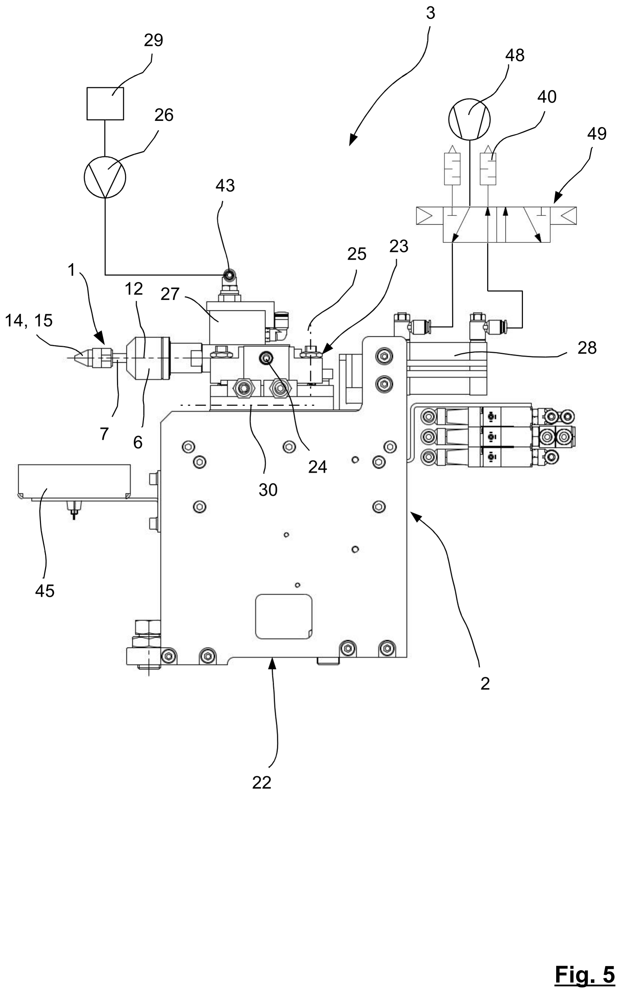

Bei dem gezeigten Doppelendprofiler **35** kommt hingegen ein System 3 zur Schmierung der Schmierstellen **4** zum Einsatz, das hier und vorzugsweise automatisch arbeitet. Dieses System **3,** das sich schematisch anhand von **Figur 5** ergibt, umfasst eine Schmiervorrichtung **2,** die sich besonders gut anhand von **Figur 4** ergibt. Die Schmiervorrichtung **2** ist dazu vorgesehen und eingerichtet, mit der jeweiligen Gelenkkette **5** derart zusammenzuwirken, dass die Schmierstellen **4** der Gelenkkette **5** ohne händisches Eingreifen eines Benutzers des Doppelendprofilers **35** geschmiert werden können. Hierzu ist die Schmiervorrichtung **2** relativ zu der jeweiligen Gelenkkette **5** positioniert. Dies ist besonders gut anhand von **Figur 2** erkennbar.

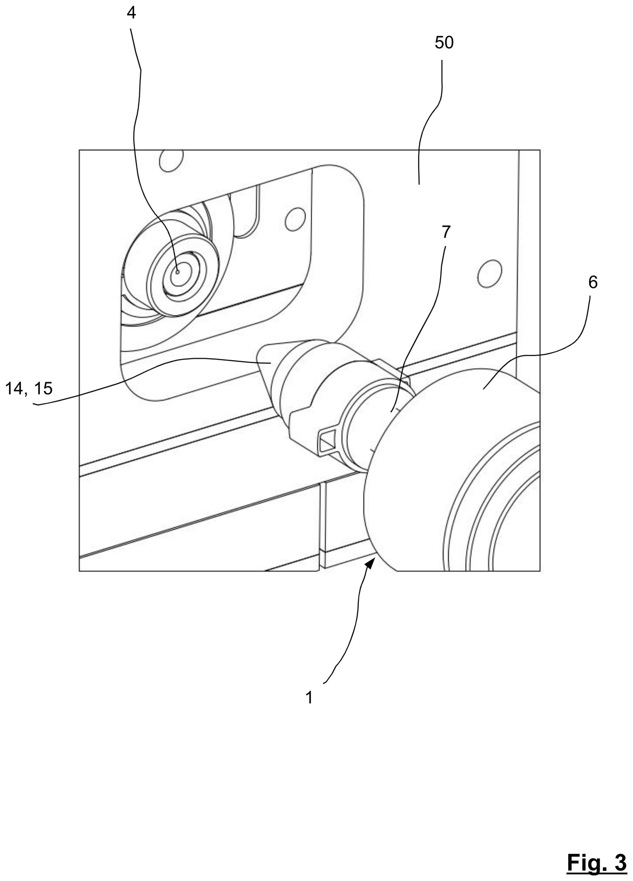

In dem gezeigten Beispiel ist die Schmiervorrichtung **2** dem Untertrum der gezeigten Gelenkkette **5** zugeordnet und unmittelbar vor einer Umlenkstation **39** angeordnet. Ein seitliches Abdeckblech **50,** das die Gelenkkette **5** seitlich abdeckt, weist in dem gezeigten Beispiel mehrere Ausnehmungen auf, die einen seitlichen Zugriff (in Richtung senkrecht zu der Kettenebene) auf die Schmierstellen **4** der Gelenkkette **5** erlauben. Die Schmiervorrichtung **2** ist dementsprechend derart relativ zu der Gelenkkette **5** ausgerichtet, dass eine Appliziereinheit **1** der Schmiervorrichtung **2** in Kontakt mit der jeweilig zu schmierenden Schmierstelle **4** gebracht werden kann. Hierbei wird die jeweilige Schmierstelle **4** fluchtend mit einer Längsachse **12** eines Hohlkolbens **7** der Appliziereinheit **1** der Schmiervorrichtung **2** ausgerichtet. Dies ergibt sich besonders gut anhand von **Figur 3****.** Insbesondere kann der Doppelendprofiler **35** zum Zweck der Wartung der Gelenkkette **5** derart betrieben werden, dass die Gelenkkette **5** in einer "Wartungsfahrt" sukzessive die einzelnen Schmierstellen **4** zwischen ihren Kettengliedern in der beschriebenen Weise relativ zu der Appliziereinheit **1** ausrichtet. Auf diese Weise können die Schmierstellen **4** nacheinander in der nachstehend beschriebenen Weise geschmiert werden. Nach jedem einzelnen Schmiervorgang wird die Gelenkkette entsprechend um das Maß eines Kettenglieds **42** weiter bewegt, sodass die jeweils nächste Schmierstelle **4** für den nächsten Schmiervorgang ausgerichtet ist.

Für die Durchführung eines jeweiligen Schmiervorgangs umfasst das System **3** einen Schmierstofftank **29,** in dem Schmierstoff vorgehalten ist. Dieser ist in dem gezeigten Beispiel von einem handelsüblichen Schmierfett gebildet. Der Schmierstofftank **29** ist mittels einer nicht näher dargestellten Schmierstoffleitung mit einer Schmierstoffpumpe **26** verbunden, die dazu vorgesehen und eingerichtet ist, den vorgehaltenen Schmierstoff der Schmiervorrichtung **2** zuzuführen. Insbesondere wird der Schmierstoff mittels der Schmierstoffpumpe **26** zu der Appliziereinheit **1** der Schmiervorrichtung **2** gefördert. An der Schmiervorrichtung **2** ist hierzu ein Schmierstoffanschluss **43** vorgesehen.

Um den Fluss des Schmierstoffs wechselweise zu unterbrechen und freizugeben, verfügt das System des Weiteren über ein Absperrventil **27,** das hier und vorzugsweise von einem pneumatischen Ventil gebildet ist. Als solches ist das Absperrventil **27** pneumatischen zwischen einer Geschlossenstellung und einer Offenstellung umschaltbar. Bei Vorliegen in der Geschlossenstellung ist die Förderung des Schmierstoffs von dem Schmierstofftank **29** zu der Appliziereinheit **1** blockiert. Entsprechend ist die beschriebene Förderung freigegeben, wenn sich das Absperrventil **27** in seiner Offenstellung befindet.

Das System **3** umfasst ferner die Schmiervorrichtung **2,** die als solche die Appliziereinheit **1** und einen Grundkörper **23** sowie eine Basis **22** umfasst. Der Grundkörper **23** ist linear beweglich an der Basis **22** gelagert. Eine Bewegungsachse **30,** entlang der der Grundkörper **23** relativ zu der Basis **22** bewegt werden kann, ist in dem gezeigten Beispiel horizontal orientiert. In dem gezeigten Beispiel ist der Grundkörper **23** mittels Gleitschienen **44** an der Basis **22** gelagert. Letztere steht fest auf einem nicht dargestellten Untergrund auf.

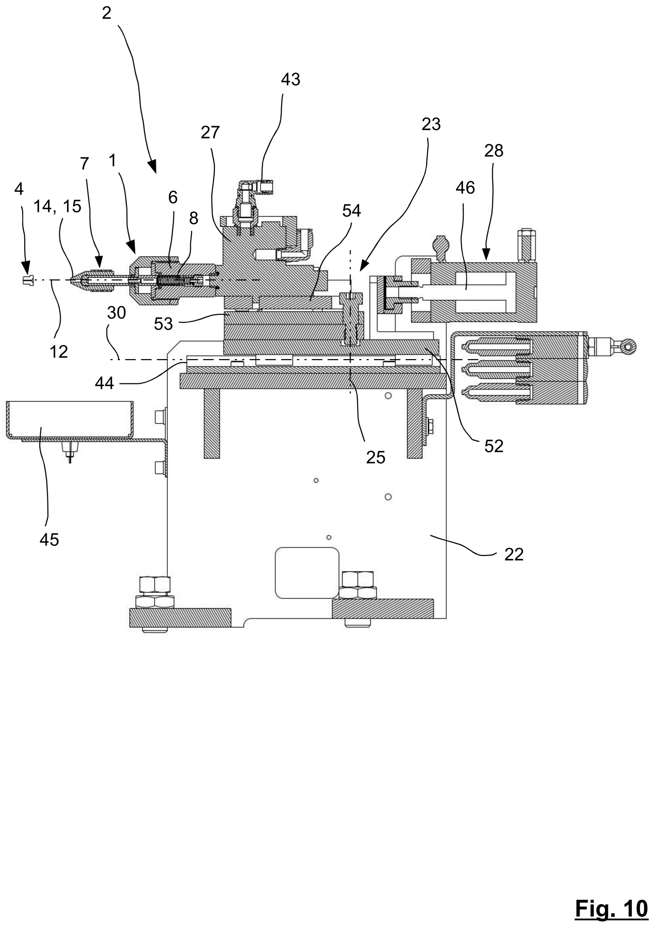

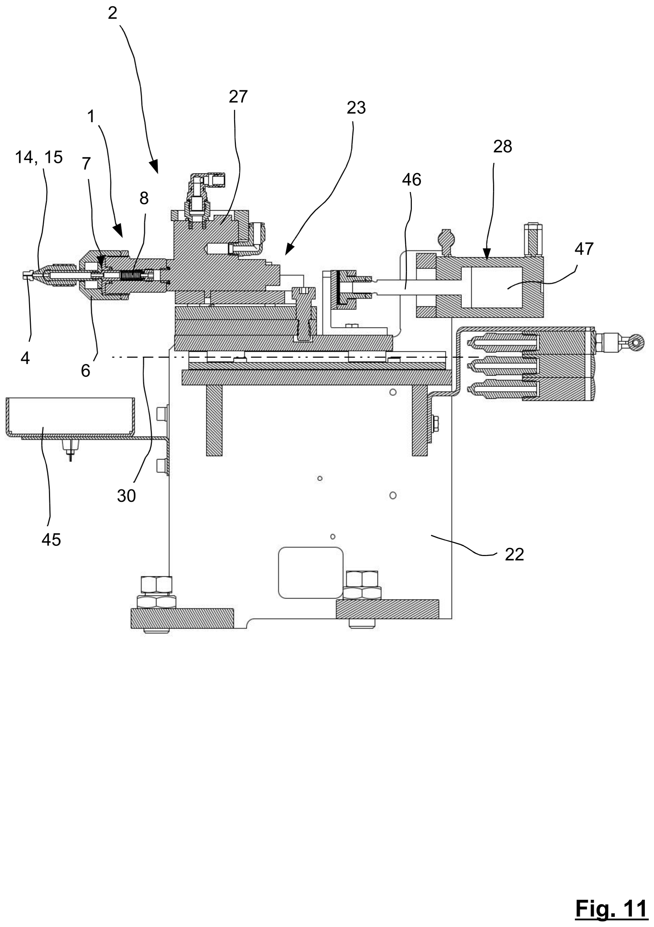

Um den Grundkörper **23** relativ zu der Basis **22** bewegen zu können, umfasst das System **3** ferner einen Fahrantrieb **28,** der mit dem Grundkörper **23** zusammenwirkt. Der Fahrantrieb **28** ist in dem gezeigten Beispiel von einem pneumatischen Antrieb gebildet, der einen doppelwirkenden Pneumatikzylinder mit einem Kolben **46** umfasst (siehe insbesondere **Figuren 10** **und** **11****).** Auf diese Weise kann der Grundkörper **23** in beide Richtungen entlang der Bewegungsachse **30** pneumatischen angetrieben werden. In **Figur 5** ist hierzu vereinfacht dargestellt, dass der Fahrantrieb **28** mit einem Kompressor **48** wirkverbunden ist, der pneumatischen Druck bereitstellen kann. Mittels des Fahrantriebs **28** ist der Grundkörper **23** zwischen einer Ruhestellung, wie sie beispielsweise in **Figur 4** und **Figur 10** dargestellt ist, und einer Applizierstellung, wie sie beispielsweise in **Figur 11** dargestellt ist, überführbar. Zur Umschaltung zwischen den Antriebsrichtungen des Fahrantriebs **28** ist der Kompressor **48** mittels eines 5/2 Wegeventils **49** mit dem Fahrantrieb **28** verschaltet, sodass der Grundkörper **23** wechselweise "ausgefahren" (von Ruhestellung in Applizierstellung) und "eingefahren" (von Applizierstellung in Ruhestellung) werden kann. Das 5/2 Wegeventil **49** wirkt hier und vorzugsweise mit Schalldämpfern **40** zusammen, über die der jeweilige Arbeitsraum des Fahrantriebs **28** entlüften kann. Wie sich nachstehend anhand der Betriebsweise des Systems **3** ergibt, findet die Schmierung eine jeweilige Schmierstelle **4** bei Vorliegen des Grundkörpers **23** in seiner Applizierstellung statt.

Die Appliziereinheit **1** der Schmiervorrichtung **2** des Systems **3** ist in dem gezeigten Beispiel mittelbar an dem Grundkörper **23** gelagert. Hier und vorzugsweise ist die Appliziereinheit **1** unmittelbar an das Absperrventil **27** angeschlossen, wobei das Absperrventil **27** unmittelbar an dem Grundkörper **23** gelagert ist.

Hier und vorzugsweise ist der Grundkörper **23** dreiteilig ausgebildet. Diese Ausgestaltung ermöglicht es, dass die Appliziereinheit **1** bezogen auf die Basis **22** insgesamt zwei Rotationsfreiheitsgrade erhält. Hierzu stellt der Grundkörper **23** eine kardanische Aufhängung bereit. Der erste Teil **52** des Grundkörpers **23** ist über die beschriebenen Gleitschienen **44** linear entlang der Bewegungsachse **30** beweglich an der Basis **22** gelagert. Der zweite Teil **53** des Grundkörpers **23** ist um eine vertikale Rotationsachse **25** drehbeweglich an dem ersten Teil **52** des Grundkörpers **23** gelagert. Diese Drehbewegung ist hier und vorzugsweise durch seitliche Anschläge **51** auf einen kleinen Winkelbereich begrenzt, beispielsweise ±5° um eine neutrale Mittellage, die in den Figuren dargestellt ist. Des Weiteren ist der dritte Teil **54** des Grundkörpers **23** um eine horizontale Rotationsachse **24** drehbeweglich an dem zweiten Teil **53** des Grundkörpers **23** gelagert. Diese Drehbewegung ist hier und vorzugsweise ebenfalls auf einen kleinen Winkelbereich begrenzt, beispielsweise ±5° um eine neutrale Mittellage, die in den Figuren dargestellt ist. Die horizontale Rotationsachse **24** ist dabei senkrecht zu einer in den Figuren nicht dargestellten Längsebene orientiert, die vertikal orientiert ist und die Längsachse **12** des Hohlkolbens **7** beinhaltet. Diese Längsebene schneidet gedanklich den Grundkörper **23** in zwei gleiche Hälften und stellt mithin auch eine Symmetrieebene des Grundkörpers **23** dar. Die vertikale Rotationsachse **25** verläuft hier und vorzugsweise innerhalb der Längsebene. Über die Ausbildung der beiden Rotationsachsen **24, 25** zwischen den einzelnen Teilen **52, 53, 54** des Grundkörpers **23** ist die Appliziereinheit **1** unter Ausbildung zweier Rotationsfreiheitsgrade relativ zu der Basis **22** gelagert. Hierdurch kann eine gewisse Korrektur einer ungenauen Positionierung einer jeweiligen Schmierstelle **4** relativ zu der Appliziereinheit **1** ausgeglichen werden.

In dem gezeigten Beispiel ist die Appliziereinheit **1** unmittelbar an das Absperrventil **27** angeschlossen, das als solches unmittelbar an dem dritten Teil **54** des Grundkörpers **23** gelagert ist.

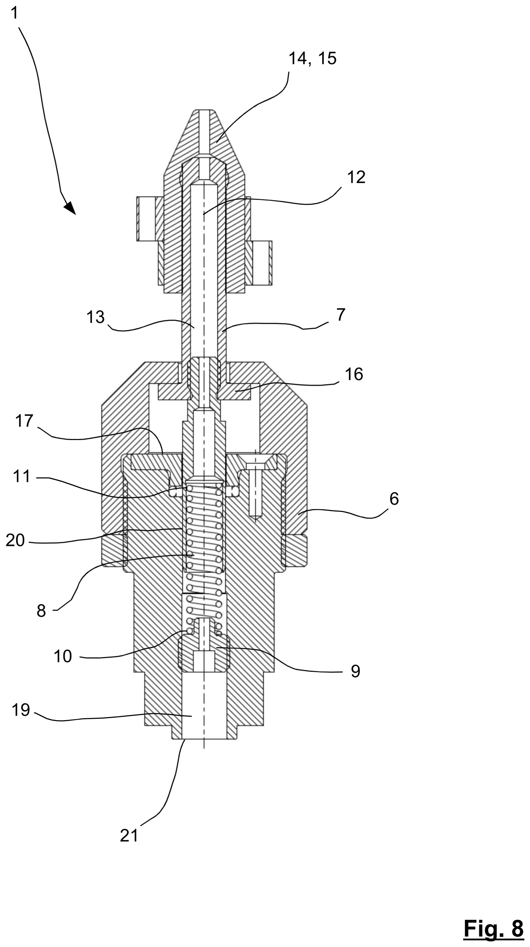

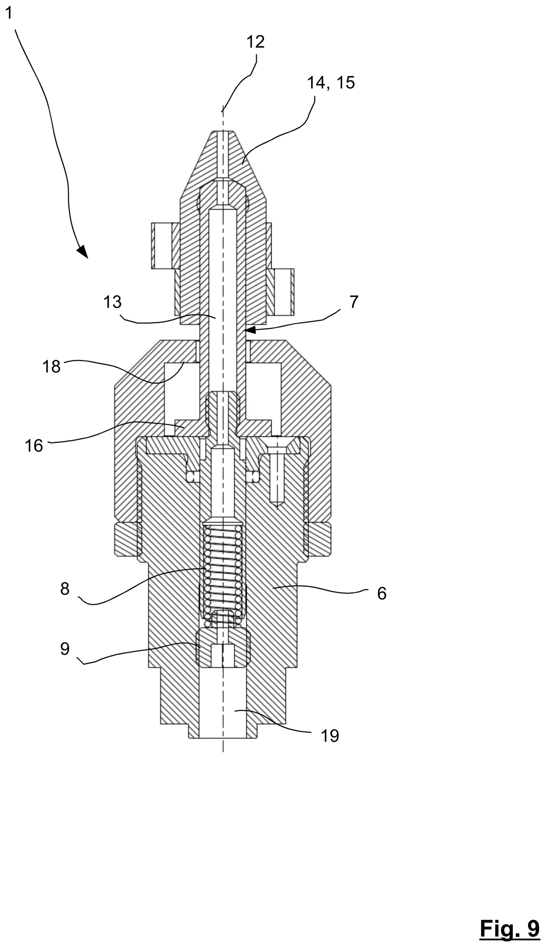

Die Appliziereinheit **1,** die sich besonders gut anhand der **Figuren 8** **und** **9** ergibt, umfasst ein Gehäuse **6** sowie einen relativ zu dem Gehäuse **6** bewegbaren Hohlkolben **7.** Das Gehäuse **6** ist hier und vorzugsweise zweiteilig ausgebildet. In dem gezeigten Beispiel ist der eine Teil nach Art einer Überwurfmutter auf den zweiten Teil aufgeschraubt. Andere Ausgestaltungen des Gehäuses **6,** auch solche mit mehreren Teilen, sind ebenfalls denkbar.

Der Hohlkolben **7** ist mit einem proximalen Endabschnitt **20** in dem Gehäuse **6** gelagert. Der Hohlkolben **7** ist hier und vorzugsweise in sich starr, das heißt nicht teleskopierbar, und entlang seiner Längsachse **12** langgestreckt ausgebildet, wobei er auf seiner gesamten Länge von einem koaxial zu der Längsachse **12** verlaufenden Schmierstoffkanal **13** durchdrungen ist. Auf diese Weise kann Schmierstoff ausgehend von einem proximalen Ende des Hohlkolbens **7** durch den Schmierstoffkanal **13** hindurch bis zu einer distalen Kolbenspitze **14** des Hohlkolbens **7** gefördert werden und dort aus dem Hohlkolben **7** austreten.

In dem gezeigten Beispiel umfasst das Gehäuse **6** ebenfalls einen Schmierstoffkanal **19** (hier: in dem zweiten Teil des Gehäuses **6**), der koaxial zu dem Schmierstoffkanal **13** des Hohlkolbens **7** ausgerichtet ist. Der Hohlkolben **7** ist mit seinem proximalen Endabschnitt **20** in dem Schmierstoffkanal **19** des Gehäuses **6** beweglich gelagert. Bei einer Bewegung des Hohlkolbens **7** relativ zu dem Gehäuse **6** bewegt sich mithin der proximale Endabschnitt **20** des Hohlkolbens **7** in längsachsparallele Richtung innerhalb des Schmierstoffkanals **19** des Gehäuses **6.**

Die Appliziereinheit **1** umfasst ferner eine Federeinrichtung **8,** die hier und vorzugsweise von einer Spiralfeder gebildet ist, die mit einer Druckspannung vorgespannt ist. Die Federeinrichtung **8** ist an ihrem ersten Ende **10** an dem Gehäuse **6** gelagert bzw. abgestützt, wobei das Gehäuse **6** hierzu ein feststehendes Federlager **9** umfasst, an dem das erste Ende **10** der Federeinrichtung **8** anliegt. Das dem ersten Ende **10** gegenüberliegende zweite Ende **11** der Federeinrichtung **8** liegt in dem gezeigten Beispiel unmittelbar an dem Hohlkolben **7** an. Auf diese Weise ist die Federeinrichtung **8** dazu geeignet, die in ihr gespeicherte Federkraft auf den Hohlkolben **7** zu übertragen und hierdurch den Hohlkolben **7** relativ zu dem Gehäuse **6** anzutreiben. Insbesondere ist in dem gezeigten Beispiel die Federeinrichtung **8** bestrebt, den Hohlkolben **7** aus dem Gehäuse **6** herauszudrücken, sodass sich die distale Kolbenspitze **14** von dem Gehäuse **6** weg bewegt.

Diese Bewegung ist in dem gezeigten Beispiel durch einen Anschlag **16** des Hohlkolbens **7** begrenzt, der hier als Anschlagring ausgebildet ist und sich radial bezogen auf die Längsachse **12** des Hohlkolbens **7** erstreckt. Der Anschlag **16** ist dazu vorgesehen und eingerichtet, mit entsprechenden Anschlagflächen **17, 18** des Gehäuses **6** zusammenzuwirken. Diese sind in dem gezeigten Beispiel in dem ersten Teil des Gehäuses **6** ausgebildet. Bei der in **Figur 8** veranschaulichten Anlage des Anschlags **16** an einer distalen Anschlagfläche **18** des Gehäuses **6** ist der Hohlkolben **7** weitestmöglich aus dem Gehäuse **6** heraus bewegt. Mithin liegt der Hohlkolben **7** in diesem Zustand in seiner "ausgefahrenen Stellung" vor. Demgegenüber veranschaulicht **Figur 9** die "eingefahrene Stellung" des Hohlkolbens **7,** die dadurch definiert ist, dass der Anschlag **16** des Hohlkolbens **7** an einer proximalen Anschlagfläche **17** des Gehäuses **6** anliegt. Der Verbleib des Hohlkolbens **7** in der eingefahrenen Stellung ist lediglich unter Aufbringung einer äußeren Kraft auf den Hohlkolben **7** möglich, die von solchem Betrag ist, dass sie die Federkraft der Federeinrichtung **8** überwindet und mithin den Hohlkolben **7** entgegen der Federeinrichtung **8** in das Gehäuse **6** "eindrückt". Bei Vorliegen des Hohlkolbens **7** in der eingefahrenen Stellung ist die Federeinrichtung **8** zwischen dem Federlager **9** und dem Hohlkolben **7** gestaucht. Bei Vorliegen des Hohlkolbens **7** in der ausgefahrenen Stellung ist die Federeinrichtung **8** in dem gezeigten Beispiel nicht voll entspannt, sodass weiterhin eine restliche Federkraft besteht, die den Hohlkolben **7** in Abwesenheit äußerer Kräfte in der ausgefahrenen Stellung hält.

Der Schmierstoffkanal **19** des Gehäuses **6** ist in dem gezeigten Beispiel bis zu einem proximalen Ende des Gehäuses **6** geführt, sodass ein proximales Ende **21** des Schmierstoffkanals **19** des Gehäuses **6** offen ist. Entsprechend ist es besonders einfach möglich, Schmierstoff durch dieses proximale Ende **21** des Schmierstoffkanals **19** hindurch der Appliziereinheit **1** zuzuführen. Die Zuführung von Schmierstoff zu der Appliziereinheit **1** findet bestimmungsgemäß statt, wenn sich die Appliziereinheit **1** in Eingriff mit einer jeweiligen Schmierstelle **4** befindet (wie in **Figur 11** veranschaulicht). Das Absperrventil **27** ist hierzu in seine Offenstellung geschaltet. Ebenso ist die Schmierstoffpumpe **26** aktiviert, sodass Schmierstoff ausgehend von dem Schmierstofftank **29** in die Appliziereinheit **1** gefördert wird. Hierbei tritt der Schmierstoff in den Schmierstoffkanal **19** des Gehäuses **6** ein. Damit der Schmierstoff in den Schmierstoffkanal **13** des Hohlkolbens **7** übertreten kann, ist in dem gezeigten Beispiel das Federlager **9** in Form einer in den Schmierstoffkanal **19** des Gehäuses **6** eingeschraubt Hohlschraube ausgebildet. Dies ergibt sich besonders gut anhand der **Figuren 8** **und** **9****.** Auf diese Weise ist das Federlager **9** für den Schmierstoff durchlässig, sodass der Schmierstoff von der einen (proximalen) Seite des Federlagers **9** zu der gegenüberliegenden (distalen) Seite des Federlagers **9** übertreten kann. Mithin kann der Schmierstoff ausgehend von dem proximalen Ende **21** des Schmierstoffkanals **19** des Gehäuses **6** durch das Federlager **9** hindurch entlang des Schmierstoffkanals **19** strömen und schließlich in den Schmierstoffkanal **13** des Hohlkolbens **7** übertreten. Da dieser den Hohlkolben **6** auf ganzer Länge durchdringt, kann der Schmierstoff entlang des Hohlkolbens **7** bis zu der distalen Kolbenspitze **14** gefördert werden, an der der Schmierstoff schließlich austreten und bestimmungsgemäß in die jeweilige Schmierstelle **4** eintreten kann.

Hier und vorzugsweise weist der Hohlkolben **7** eine Schmierdüse **15** auf, die die Kolbenspitze **14** des Hohlkolbens **7** bildet. Die Schmierdüse **15** ist derart ausgebildet, dass sie sich zu dem distalen Ende des Hohlkolbens **7** hin verjüngt. Hier und vorzugsweise weist die Schmierdüse **15** einen konischen Endabschnitt auf. Die Schmierdüse **15** ist hier und vorzugsweise von einem Elastomer gebildet.

Ausgehend von den **Figuren 2** **und** **10** dargestellten Situation, in der eine Schmierstelle **4** in der beschriebenen Weise fluchtend mit der Längsachse **12** des Hohlkolbens **7** ausgerichtet ist, kann nunmehr der Schmiervorgang beginnen. Beim Beginn des Schmiervorgangs ist das Absperrventil **27** geschlossen und die Schmierstoffpumpe **26** ist deaktiviert. Der Grundkörper **23** befindet sich in seiner Ruhestellung. Sodann wird der Fahrantrieb **28** aktiviert, sodass der Grundkörper **23** relativ zu der Basis **22** entlang der zu der Längsachse **12** des Hohlkolbens **7** parallelen Bewegungsachse **30** in Richtung seiner Applizierstellung bewegt wird. Im Zuge dieser Bewegung tritt die Kolbenspitze **14** bzw. die Schmierdüse **15** alsbald in Kontakt mit der Schmierstelle **4.** Eine weitere Bewegung des Hohlkolbens **7** in Richtung parallel zur Bewegungsachse **30** ist daraufhin wegen der Schmierstelle **4** nicht möglich, da letztere nicht in Richtung parallel zu der Längsachse **12** des Hohlkolbens **7** ausweichen oder sich auf sonstige Weise wegbewegen kann. Entsprechend führt die weitergehende Bewegung des Grundkörpers **23** in Richtung seiner Applizierstellung dazu, dass der Hohlkolben **7** infolge des Anschlags an der Schmierstelle **4** entgegen der Federkraft der Federeinrichtung **8** in längsachsparallele Richtung in das Gehäuse **6** eingedrückt bzw. eingefahren wird. Hierdurch bedingt wird der Hohlkolben **7** ausgehend von seiner ausgefahrenen Stellung, die er beim initialen Kontakt mit der Schmierstelle **4** aufweist, in seiner eingefahrene Stellung überführt. Sobald der Anschlag **16** des Hohlkolbens **7** an der proximalen Anschlagfläche **17** des Gehäuses **6** zur Anlage gelangt, ist eine weitere Bewegung der Appliziereinheit **1** und mithin des Grundkörpers **23** auf die Schmierstelle **4** zu nicht möglich. Dieser Zustand ergibt sich besonders gut anhand von **Figur 11****.**

Daraufhin wird der Fahrantrieb **28** deaktiviert, wobei in einem hinteren Arbeitsraum **47** des Fahrantriebs **28** zumindest ein pneumatischer Haltedruck aufrecht erhalten wird, um zu vermeiden, dass der Grundkörper **23** angetrieben durch die Federkraft der Federeinrichtung **8** wieder zurück in Richtung seiner Ruhestellung bewegt wird. Der Grundkörper **23** hat somit seine Applizierstellung erreicht. In diesem Zustand wird zunächst das Absperrventil **27** in seine Offenstellung geschaltet und sodann die Schmierstoffpumpe **26** aktiviert. In der beschriebenen Weise wird hierdurch der Schmierstoff bis zu der distalen Kolbenspitze **14** des Hohlkolbens **7** gefördert und tritt dort bestimmungsgemäß in die Schmierstelle **4** über. Nach einer gewissen Zeit, beispielsweise fünf Sekunden, wird die Schmierstoffpumpe **26** deaktiviert und sodann das Absperrventil **27** zurück in seine Geschlossenstellung geschaltet. Sodann wird der Grundkörper **23** ausgehend von seiner Applizierstellung mittels des Fahrantriebs **28** zurück in Richtung seiner Ruhestellung bewegt. Hierbei wird in der beschriebenen Weise der Hohlkolben **7** durch Wirkung der Federeinrichtung **8** aus dem Gehäuse **6** herausbewegt. Hinsichtlich des Kontakts des Hohlkolbens **7** mit der Schmierstelle **4** wird folglich die Bewegung des Grundkörpers **23** anfangs durch das Ausfahren des Hohlkolbens **7** kompensiert, sodass trotz der Bewegung des Grundkörpers **23** zurück in Richtung der Ruhestellung die Kolbenspitze **14** zunächst noch in Kontakt mit der Schmierstelle **4** verbleibt.

Im Zuge der Bewegung des Hohlkolbens **7** aus dem Gehäuse **6** heraus wird in der vorstehend beschriebenen Weise Raum innerhalb des Gehäuses **6** freigegeben. Hierdurch wird in dem Gehäuse **6** ein Unterdruck erzeugt, der dazu führt, dass der noch an der Kolbenspitze **14** anliegende Schmierstoff zurück in Richtung des Gehäuses **6** eingesogen wird. Dieser Effekt endet erst damit, dass der Hohlkolben **7** seine ausgefahrenen Stellung erreicht, das heißt dessen Anschlag **16** an der distalen Anschlagfläche **18** des Gehäuses **6** zur Anlage gelangt. Sobald dies der Fall ist, führt die weitergehende Bewegung des Grundkörpers **23** in Richtung seiner Ruhestellung dazu, dass die Kolbenspitze **14** sich von der Schmierstelle **4** entfernt, das heißt von dieser "abdockt". Für den Fall, dass wider Erwarten doch noch Schmierstoff herabfallen sollte, sei es restlicher Schmierstoff, der zuvor an der Schmierdüse **15** oder der Schmierstelle **4** anhaftete, ist das System **3** hier und vorzugsweise mit einer Auffangschale **45** ausgestattet, die vertikal unterhalb der Schmierstelle **4** angeordnet ist.

Sobald der Grundkörper **23** seine Ruhestellung erreicht hat (Zustand in **Figur 10**), ist der Schmiervorgang abgeschlossen. Für die Schmierung der nächsten Schmierstelle **4** wird nunmehr die Gelenkkette **5** weiterbewegt, sodass die nächste Schmierstelle **4** fluchtend mit der Längsachse **12** des Hohlkolbens **7** ausgerichtet ist. Sodann kann der nächste Schmiervorgang beginnen.

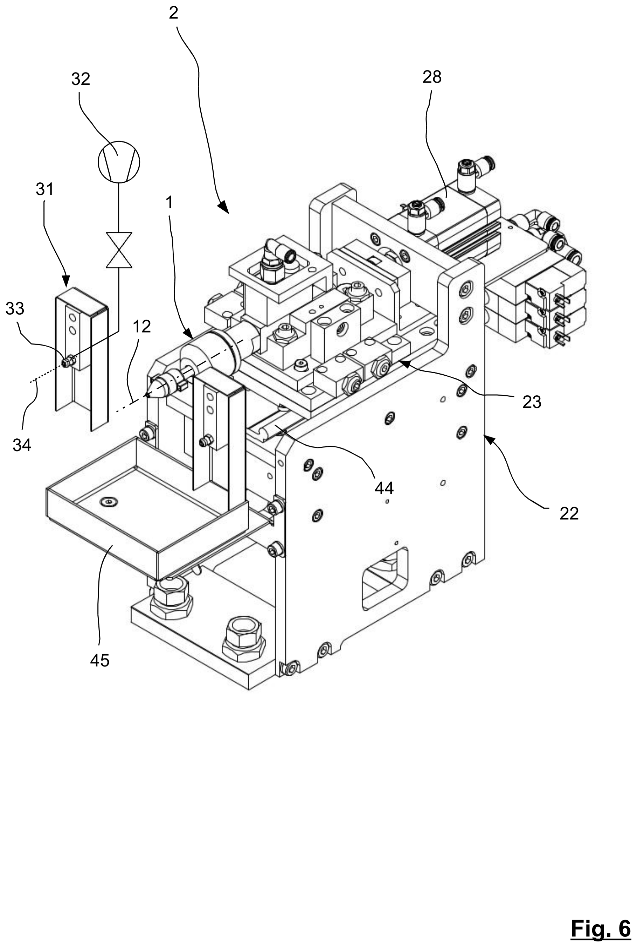

In besonders bevorzugter Weise ist das System **3** hier überdies mit einer Reinigungsvorrichtung **31** ausgestattet, die insgesamt zwei Düsen **33** zur Abgabe eines gerichteten Luftstroms umfasst. Die Reinigungsvorrichtung **31** ergibt sich besonders gut anhand von **Figur 6****.** Die Düsen **33** sind jeweils mittels eines schematisch in **Figur 6** dargestellten Kompressors **32** verbunden, mittels dessen die Düsen **33** mit Druckluft beschickbar sind. Die Düsen **33** sind derart ausgerichtet, dass eine jeweilige Hauptabstrahlrichtung **34** parallel zu der Längsachse **12** des Hohlkolbens **7** der Appliziereinheit **1** orientiert ist. Ferner sind die Düsen **33** auf dem gleichen vertikalen Höhenniveau wie die Kolbenspitze **14** des Hohlkolbens **7** sowie in horizontale Richtung seitlich fluchtend mit der Kolbenspitze **14** angeordnet. Wie sich weiterhin anhand von **Figur 6** ergibt, sind die Düsen **33** beidseits der Kolbenspitze **14** in einem horizontal sowie senkrecht zu der Längsachse **12** des Hohlkolbens **7** gemessenen Abstand von der Kolbenspitze **14** angeordnet. Auf diese Weise kann die eine Düse **33** eine Schmierstelle **4,** die zuvor geschmiert wurde, nach dem Schmiervorgang mittels des abgegebenen Luftstrahls reinigen, während die andere Düse **33** die "übernächste" Schmierstelle **4,** die als nächstes zur Schmierung ansteht, vor dem Schmiervorgang reinigen kann. Die zwischen den beiden zu reinigenden Schmierstellen **4** befindliche Schmierstelle **4** ist fluchtend mit der Längsachse **12** des Hohlkolbens **7** ausgerichtet und steht unmittelbar für den nächsten Schmiervorgang an. Die horizontalen Abstände der Düsen **33** von der Kolbenspitze **14** sind derart gewählt, dass die zur Reinigung vorgesehenen Schmierstellen **4** genau dann fluchtend mit der jeweiligen Hauptabstrahlrichtung **34** ausgerichtet sind, wenn die zwischen den zur Reinigung vorgesehen Schmierstelle **4** fluchtend mit der Längsachse **12** des Hohlkolbens **7** ausgerichtet ist. Auf diese Weise kann der jeweilige Schmiervorgang der einen Schmierstelle **4** gleichzeitig zu den Reinigungen der zu dieser Schmierstelle **4** beidseits benachbarten Schmierstellen **4** stattfinden.

### Bezugszeichenliste

- 1: Appliziereinheit
- 2: Schmiervorrichtung
- 3: System
- 4: Schmierstelle
- 5: Gelenkkette
- 6: Gehäuse
- 7: Hohlkolben
- 8: Federeinrichtung
- 9: Federlager
- 10: erstes Ende der Federeinrichtung
- 11: zweites Ende der Federeinrichtung
- 12: Längsachse des Hohlkolbens
- 13: Schmierstoffkanal des Hohlkolbens
- 14: Kolbenspitze
- 15: Schmierdüse
- 16: Anschlag
- 17: proximale Anschlagfläche
- 18: distale Anschlagfläche
- 19: Schmierstoffkanal des Gehäuses
- 20: proximaler Endabschnitt des Hohlkolbens
- 21: proximales Ende des Schmierstoffkanals des Gehäuses
- 22: Basis
- 23: Grundkörper
- 24: horizontale Rotationsachse
- 25: vertikale Rotationsachse
- 26: Schmierstoffpumpe
- 27: Absperrventil
- 28: Fahrantrieb
- 29: Schmierstofftank
- 30: Bewegungsachse
- 31: Reinigungsvorrichtung
- 32: Kompressor
- 33: Düse
- 34: Hauptabstrahlrichtung
- 35: Doppelendprofiler
- 36: Vorschubrichtung
- 37: Transportkette
- 38: Transportkette
- 39: Umlenkstation
- 40: Schalldämpfer
- 41: Kettenaggregat
- 42: Kettenglied
- 43: Schmierstoffanschluss
- 44: Gleitschiene
- 45: Auffangschale
- 46: Kolben
- 47: Arbeitsraum
- 48: Kompressor
- 49: 5/2 Wegeventil
- 50: Abdeckblech
- 51: Anschlag
- 52: erster Teil des Grundkörpers
- 53: zweiter Teil des Grundkörpers
- 54: dritter Teil des Grundkörpers

## Patentansprüche

1. Appliziereinheit (1) für eine Schmiervorrichtung (2) eines Systems (3) zur Schmierung von Schmierstellen (4) einer Gelenkkette (5), insbesondere einer Transportkette eines Doppelendprofilers, umfassend
- ein Gehäuse (6),
- einen an dem Gehäuse (6) gelagerten Hohlkolben (7),
- eine Federeinrichtung (8), die zur Aufbringung einer Federkraft auf den Hohlkolben (7) eingerichtet ist,
wobei das Gehäuse (6) ein festes Federlager (9) aufweist, an dem ein erstes Ende (10) der Federeinrichtung (8) gelagert ist,
wobei der Hohlkolben (7) parallel zu seiner Längsachse (12) relativ zu dem Gehäuse (6) linear zwischen einer in das Gehäuse eingefahrenen Stellung und einer aus dem Gehäuse ausgefahrenen Stellung beweglich ist,
wobei der Hohlkolben (7) einen sich parallel zu seiner Längsachse (12) erstreckenden und den Hohlkolben (7) entlang seiner gesamten Länge durchdringenden Schmierstoffkanal (13) aufweist, durch den hindurch Schmierstoff ausgehend von einem dem Gehäuse (6) zugewandten, proximalen Ende des Hohlkolbens (7) bis zu einer von dem Gehäuse (6) abgewandten, distalen Kolbenspitze (14) des Hohlkolbens (7) förderbar ist,
wobei die Federeinrichtung (8) mit ihrem zweiten Ende (11), das ihrem ersten Ende (10) gegenüberliegt, derart an dem Hohlkolben (7) gelagert ist, dass die Federkraft der Federeinrichtung (8) in längsachsparallele Richtung des Hohlkolbens (7) auf selbigen einwirkt und der Hohlkolben (7) durch Wirkung der Federkraft in Abwesenheit äußerer Kräfte in seiner ausgefahrenen Stellung gehalten ist,
wobei der Hohlkolben (7) unter Aufbringung einer axialen Kraft entgegen der Federkraft relativ zu dem Gehäuse (6) bewegbar und hierdurch in seine eingefahrene Stellung überführbar ist.

2. Appliziereinheit (1) nach Anspruch 1, **dadurch gekennzeichnet, dass** sie derart ausgebildet ist, dass durch das Überführen des Hohlkolbens (7) in seine ausgefahrene Stellung innerhalb des Gehäuses (6) ein Unterdruck erzeugt wird, sodass in dem Hohlkolben (7) befindlicher Schmierstoff, der unmittelbar an der Kolbenspitze (14) anliegt, bei der Bewegung des Hohlkolbens (7) in seine ausgefahrene Stellung infolge des sich in dem Gehäuse (6) bildenden Unterdrucks zurück in Richtung des Gehäuses (6) in den Hohlkolben (7) eingesogen wird.

3. Appliziereinheit (1) nach einem der vorhergehenden Ansprüche, **dadurch gekennzeichnet, dass** der Hohlkolben (7) eine Schmierdüse (15) umfasst, die eine distale Kolbenspitze (14) des Hohlkolbens (7) bildet, wobei sich die Schmierdüse (15) zu einem distalen Ende des Hohlkolbens (7) hin konisch verjüngt.

4. Appliziereinheit (1) nach einem der vorhergehenden Ansprüche, **dadurch gekennzeichnet, dass** der Hohlkolben (7) einen bezogen auf seine Längsachse (12) radial vorstehenden Anschlag (16) aufweist, vorzugsweise in Form eines Anschlagrings, wobei der Anschlag (16) dazu vorgesehen und eingerichtet ist, an zugeordneten Anschlagflächen (17, 18) des Gehäuses (6) zur Anlage zu gelangen, wobei eine Anlage des Anschlags (16) an einer proximalen Anschlagfläche (17) des Gehäuses (6) die eingefahrene Stellung des Hohlkolbens (7) definiert, wobei eine Anlage des Anschlags (16) an einer distalen Anschlagfläche (18) des Gehäuses (6) die ausgefahrene Stellung des Hohlkolbens (7) definiert.

5. Appliziereinheit (1) nach einem der vorhergehenden Ansprüche, **dadurch gekennzeichnet, dass** das Gehäuse (6) einen Schmierstoffkanal (19) aufweist, der koaxial zu dem Hohlkolben (7) verläuft, wobei ein proximaler Endabschnitt (20) des Hohlkolbens (7) linear beweglich in dem Schmierstoffkanal (19) des Gehäuses (6) gelagert ist, sodass Schmierstoff von dem Schmierstoffkanal (19) des Gehäuses (6) in den Schmierstoffkanal (13) des Hohlkolbens (7) und umgekehrt übertreten kann.

6. Appliziereinheit (1) nach Anspruch 5, **dadurch gekennzeichnet, dass** das Federlager (9) von einer in den Schmierstoffkanal (19) des Gehäuses (6) eingeschraubten Hohlschraube gebildet ist, sodass Schmierstoff von einem proximalen Ende (21) des Schmierstoffkanals (19) des Gehäuses (6) durch das Federlager (9) hindurch dem Schmierstoffkanal (13) des Hohlkolbens (7) zuführbar ist.

7. Schmiervorrichtung (2) für ein System (3) zur Schmierung von Schmierstellen (4) einer Gelenkkette (5), insbesondere einer Transportkette eines Doppelendprofilers, umfassend
- eine Basis (22),
- einen Grundkörper (23), der linear entlang einer Bewegungsachse (30) beweglich an der Basis (22) gelagert ist,
- eine Appliziereinheit (1), die mittelbar oder unmittelbar an dem Grundkörper (23) gelagert ist,
wobei die Appliziereinheit (1) gemäß einem der vorhergehenden Ansprüche ausgestaltet ist,
wobei die Längsachse (12) des Hohlkolbens (7) der Appliziereinheit (1) parallel zu der Bewegungsachse (30) orientiert ist.

8. Schmiervorrichtung (2) nach Anspruch 7, **dadurch gekennzeichnet, dass** die Appliziereinheit (1) unter Ausbildung von zwei Rotationsfreiheitsgraden gelagert ist, wobei der erste Rotationsfreiheitsgrad eine Drehbewegung der Appliziereinheit (1) relativ zu der Basis (22) um eine horizontale Rotationsachse (24) erlaubt, die eine senkrecht zu einer die Längsachse (12) des Hohlkolbens (7) beinhaltenten, vertikalen Längsebene orientiert ist, wobei der zweite Rotationsfreiheitsgrad eine Drehbewegung der Appliziereinheit (1) relativ zu der Basis (22) um eine vertikale Rotationsachse (25) erlaubt, die bevorzugt in der Längsebene verläuft.

9. System (3) zur Schmierung von Schmierstellen (4) einer Gelenkkette (5), insbesondere einer Transportkette eines Doppelendprofilers, umfassend
- eine Schmiervorrichtung (2),
- eine Schmierstoffpumpe (26) zur Förderung von Schmierstoff,
- ein Absperrventil (27),
- einen Fahrantrieb (28),
- einen Schmierstofftank (29) zur Vorhaltung von Schmierstoff,
wobei die Schmiervorrichtung (2) eine Basis (22), einen an der Basis (22) linear beweglich gelagerten Grundkörper (23) und eine mittelbar oder unmittelbar an dem Grundkörper (23) gelagerte Appliziereinheit (1) aufweist,
wobei die Schmierstoffpumpe (26) dazu vorgesehen und eingerichtet ist, Schmierstoff von dem Schmierstofftank (29) zu der Appliziereinheit (1) zu fördern, sodass Schmierstoff mittels der Appliziereinheit (1) einer jeweiligen Schmierstelle (4) zuführbar ist,
wobei das Absperrventil (27) wechselweise zwischen einer Geschlossenstellung, bei deren Vorliegen eine strömungstechnische Verbindung zwischen dem Schmierstofftank (29) und der Appliziereinheit (1) blockiert ist, und einer Offenstellung, bei deren Vorliegen die strömungstechnische Verbindung zwischen dem Schmierstofftank (29) und der Appliziereinheit (1) freigegeben ist, umschaltbar ist,
wobei der Fahrantrieb (28) dazu vorgesehen und eingerichtet ist, den Grundkörper (23) der Schmiervorrichtung (2) linear entlang einer Bewegungsachse (30) relativ zu der Basis (22) der Schmiervorrichtung (2) zu bewegen, wodurch der Grundkörper (23) unter Zurücklegung einer Bewegungsstrecke zwischen einer Applizierstellung und einer Ruhestellung bewegbar ist,
wobei die Appliziereinheit (1) gemäß einem der Ansprüche 1 bis 6 ausgebildet ist.

10. System (3) nach Anspruch 9, **dadurch gekennzeichnet, dass** der Fahrantrieb (28) von einem pneumatischen Antrieb gebildet ist.

11. System (3) nach einem der Ansprüche 9 oder 10, **dadurch gekennzeichnet, dass** das Absperrventil (27) ein pneumatisches Absperrventil ist, das pneumatisch zwischen seiner Offenstellung und seiner Geschlossenstellung umschaltbar ist.

12. System (3) nach einem der Ansprüche 9 bis 11, **gekennzeichnet durch** eine Reinigungsvorrichtung (31) zur Reinigung einer jeweiligen Schmierstelle (4) vor und/oder nach der Zuführung von Schmierstoff zu dieser Schmierstelle (4), wobei die Reinigungsvorrichtung (31) einen Kompressor (32) und mindestens eine Düse (33) aufweist, die mit dem Kompressor (32) strömungstechnisch verbunden ist, sodass von dem Kompressor (32) bereitgestellte Druckluft der Düse (33) zuleitbar und an der Düse (33) abstrahlbar ist, wobei die Düse (33) derart ausgerichtet ist, dass eine Hauptabstrahlrichtung (34), in die die Druckluft hauptsächlich ausgehend von der Düse (33) abstrahlbar ist, zumindest im Wesentlichen parallel zu der Längsachse (12) des Hohlkolbens (7) der Appliziereinheit (1) orientiert ist, wobei die Düse (33) zumindest im Wesentlichen in vertikale Richtung auf dem gleichen Höhenniveau wie die Kolbenspitze (14) des Hohlkolbens (7) angeordnet ist, wobei die Düse (33) in horizontale Richtung relativ zu der Kolbenspitze (14) versetzt angeordnet ist.

13. Doppelendprofiler (35) zur gleichzeitigen Bearbeitung einander gegenüberliegender Enden von Werkstücken, umfassend
- zwei endlos umlaufende, parallel zueinander orientierte sowie in horizontale Richtung voneinander beabstandete Transportketten (37, 38), die jeweils von einer Gelenkkette (5) gebildet und zum Transport der Werkstücke in eine Vorschubrichtung (36) entlang einer Bearbeitungsstrecke ausgebildet sind,
- mindestens einen Antrieb zum umlaufenden Antreiben der Transportketten (37, 38),
- mindestens zwei Bearbeitungswerkzeuge zur synchronen Bearbeitung der einander gegenüberliegenden Enden der Werkstücke,
**gekennzeichnet durch**
mindestens ein System (3) zur Schmierung von Schmierstellen (4) mindestens einer der beiden Transportketten (37, 38),
wobei das System (3) gemäß einem der Ansprüche 9 bis 12 ausgebildet ist.

14. Verfahren zur Schmierung von Schmierstellen (4) einer Gelenkkette (5), insbesondere einer als Transportkette (37, 38) ausgebildeten Gelenkkette (5) eines Doppelendprofilers (35), unter Verwendung eines Systems (3) gemäß einem der Ansprüche 9 bis 12 das Verfahren umfassend die folgenden Verfahrensschritte:
a) Die Gelenkkette (5) wird in eine Wartungsstellung gebracht, in der eine jeweils zu schmierende Schmierstelle (4) der Gelenkkette (5) zumindest im Wesentlichen fluchtend mit der Längsachse (12) des Hohlkolbens (7) der Appliziereinheit (1) der Schmiervorrichtung (2) des Systems (3) sowie in einem Abstand von dem Hohlkolben (7) angeordnet ist;
b) Der Grundkörper (23) der Schmiervorrichtung (2) des Systems (3) wird mitsamt der daran angeordneten Appliziereinheit (1) der Schmiervorrichtung (2) mittels des Fahrantriebs (28) ausgehend von seiner Ruhestellung linear relativ zu der Basis (22) entlang der Bewegungsachse (30) bewegt bis er seine Applizierstellung erreicht, wobei im Zuge dieser Bewegung nach Zurücklegung eines Teils der Bewegungsstrecke zwischen der Ruhestellung und der Applizierstellung zunächst die Kolbenspitze (14) des Hohlkolbens (7) der Appliziereinheit (1) in Kontakt mit der zu schmierenden Schmierstelle (4) gerät und sodann bei Fortführung der Bewegung des Grundkörpers (23) entlang der Bewegungsachse (30) der Hohlkolben (7) der Appliziereinheit (1) entgegen der Federkraft der Federeinrichtung (8) der Appliziereinheit (1) ausgehend von seiner ausgefahrenen Stellung in seine eingefahrene Stellung überführt wird, bei deren Erreichen der Grundkörper (23) in seiner Applizierstellung vorliegt;
c) Nachdem der Grundkörper (23) seine Applizierstellung und der Hohlkolben (7) der Appliziereinheit (1) seine eingefahrene Stellung eingenommen haben, wird das Absperrventil (27) von seiner Geschlossenstellung in seine Offenstellung geschaltet und danach die Schmierstoffpumpe (26) aktiviert, sodass Schmierstoff von dem Schmierstofftank (29) zu der Appliziereinheit (1) der Schmiervorrichtung (2) gefördert und dort an der Kolbenspitze (14) des Hohlkolbens (7) an die Schmierstelle (4) übergeben wird;
d) Nach erfolgter Übergabe des Schmierstoffs an die Schmierstelle (4) wird die Schmierstoffpumpe (26) deaktiviert und danach das Absperrventil (27) von seiner Offenstellung zurück in seine Geschlossenstellung geschaltet;
e) Nach der Schaltung des Absperrventils (27) in die Geschlossenstellung wird der Grundkörper (23) ausgehend von seiner Applizierstellung zurück in seine Ruhestellung bewegt, wobei im Zuge dieser Bewegung der Hohlkolben (7) der Appliziereinheit (1) durch Wirkung der Federkraft der Federeinrichtung (8) zurück von seiner eingefahrenen Stellung in seine ausgefahrene Stellung bewegt wird.

15. Verfahren nach Anspruch 14, **dadurch gekennzeichnet, dass** der Grundkörper (23) mittels des Fahrantriebs (28) ausgehend von seiner Applizierstellung zurück in seine Ruhestellung bewegt wird.
